# EUROPEAN PATENT APPLICATION

(11) **EP 4 831 802 A1**
(43) Date of publication of application: **28.10.2026**
(21) Application number: 24916800.6
(22) Date of filing: 31.12.2024
(51) Int. Cl.: G06F 9/451

(54) **DISPLAY METHOD, ELECTRONIC DEVICE AND READABLE STORAGE MEDIUM**

(30) Priority: 10.01.2024 CN 202410038322
(71) Applicant: Huawei Technologies Co., Ltd., Shenzhen, Guangdong 518129 (CN)
(72) Inventor: ZHU, Fengyao, Shenzhen, Guangdong 518129 (CN); ZHANG, Yunyi, Shenzhen, Guangdong 518129 (CN); LU, Dong, Shenzhen, Guangdong 518129 (CN)
(74) Representative: Körber, Martin Hans
(86) International application number: PCT/CN2024/144155
(87) International publication number: WO 2025/148753

(57) **Abstract**

This application provides a display method, an electronic device, and a readable storage medium. In the method, the electronic device includes a first display area, a second display area, and a third display area. The second display area is located between the first display area and the third display area. The electronic device displays an interface of a first application in the first display area, displays an interface of a second application in the second display area, and displays an interface of a third application in the third display area. In response to a first gesture performed by a user on the interface of the first application or the interface of the second application, the electronic device displays the interface of the second application in the first display area, and displays the interface of the first application in the second display area. Applied to a tri-fold device, a quad-fold device, and even a higher-order foldable device, this application allows the user to switch display between two to-be-switched application interfaces by performing an operation on either of the two application interfaces on the electronic device, thereby simplifying operations.

## Description

This application claims priority to Chinese Patent Application No. 202410038322.9, filed with the China National Intellectual Property Administration on January 10, 2024 and entitled "DISPLAY METHOD, ELECTRONIC DEVICE, AND READABLE STORAGE MEDIUM", which is incorporated herein by reference in its entirety.

### TECHNICAL FIELD

Embodiments of this application relate to the field of foldable screen device technologies, and in particular, to a display method, an electronic device, and a readable storage medium.

### BACKGROUND

With the evolution of electronic devices, display screens have become increasingly large. To facilitate user operations, foldable screen devices have emerged. As dual-fold devices become more widely adopted, tri-fold devices, quad-fold devices, and even higher-order foldable devices are also being developed and adopted. Compared with dual-fold devices, these tri-fold devices, quad-fold devices, and even higher-order foldable devices feature larger screen sizes in an unfolded state. Therefore, ensuring convenient user operations remains a pressing issue that needs to be resolved.

### SUMMARY

Embodiments of this application provide a display method, an electronic device, and a readable storage medium. Applied to a tri-fold device, a quad-fold device, and even a higher-order foldable device, this application allows a user to switch display between two to-be-switched application interfaces by performing an operation on either of the two application interfaces on the electronic device, thereby simplifying operations.

According to a first aspect, an embodiment of this application provides a display method. The display method is performed by an electronic device or a chip in the electronic device. The following uses the electronic device as an example for description. In the method, the electronic device includes a first display area, a second display area, and a third display area, and the second display area is located between the first display area and the third display area.

The electronic device displays an interface of a first application in the first display area, displays an interface of a second application in the second display area, and displays an interface of a third application in the third display area. In response to a first gesture performed by a user on the interface of the first application or the interface of the second application, the electronic device may switch display between the interface of the first application and the interface of the second application, that is, the electronic device displays the interface of the second application in the first display area, and displays the interface of the first application in the second display area.

Applied to a tri-fold device, a quad-fold device, and even a higher-order foldable device, this application allows the user to switch display between two to-be-switched application interfaces by performing an operation on either of the two application interfaces on the electronic device, thereby simplifying operations.

In a possible implementation, the first gesture is pressing a preset position of the interface of the first application with a single finger and sliding toward the interface of the second application, or pressing a preset position of the interface of the second application with a single finger and sliding toward the interface of the first application. The interface of the first application is used as an example to describe a preset position of an application interface. The preset position of the interface of the first application may be a top, a left side, a right side, or the like of the interface of the first application, or a blank position of the interface of the first application.

Alternatively, the first gesture is dragging the interface of the first application to the second display area, or dragging the interface of the second application to the first display area.

In a possible implementation, the interface of the first application, the interface of the second application, and the interface of the third application may belong to different applications. Alternatively, in a possible implementation, at least two of the interface of the first application, the interface of the second application, and the interface of the third application may belong to a same application.

In other words, the display method provided in this embodiment of this application is applicable to a scenario of switching display between interfaces of different applications, and is further applicable to a scenario of switching display between interfaces of a same application.

The foregoing example describes a process in which the electronic device switches display between two adjacent application interfaces. The following describes a process in which the electronic device switches display between two non-adjacent application interfaces. For example, the two non-adjacent application interfaces are the interface of the first application and the interface of the third application.

The electronic device displays the interface of the first application in the first display area, displays the interface of the second application in the second display area, and displays the interface of the third application in the third display area. In response to a second gesture performed by the user on the interface of the first application or the interface of the third application, the electronic device displays the interface of the third application in the first display area, and displays the interface of the first application in the third display area, where the second gesture is different from the first gesture.

For example, the second gesture is pressing the preset position of the interface of the first application with a single finger and sliding away from the interface of the third application, or pressing a preset position of the interface of the third application with a single finger and sliding away from the interface of the first application. Sliding away from the interface of the third application may be understood as sliding in a direction away from the interface of the third application. Correspondingly, sliding away from the interface of the first application may be understood as sliding in a direction away from the interface of the first application.

Alternatively, the second gesture is dragging the interface of the first application to the third display area, or dragging the interface of the third application to the first display area.

In this implementation, the electronic device can switch display between two non-adjacent application interfaces.

In addition, in this embodiment of this application, the electronic device can switch display between an interface of a foreground application and an interface of a background application, as shown in the following:

First, the electronic device displays the interface of the first application in the first display area, displays the interface of the second application in the second display area, and displays the interface of the third application in the third display area. In response to a third gesture performed by the user on the interface of the first application or the interface of the third application, the electronic device displays the interface of the second application in the first display area, displays the interface of the third application in the second display area, and displays the interface of the background application in the third display area.

In other words, in this example, the electronic device can switch display between the interface of the first application and the interface of the background application, and specifically, display the interface of the background application in a display area in which the interface of the third application is previously displayed.

For example, the third gesture is pressing the preset position of the interface of the first application with two fingers and sliding away from the interface of the third application, or pressing the preset position of the interface of the third application with two fingers and sliding toward the interface of the first application.

An application to which the interface of a background application belongs is an application ranked first in a background task queue. In this application, after displaying the interface of the second application in the first display area, displaying the interface of the third application in the second display area, and displaying the interface of the background application in the third display area, in response to the third gesture performed by the user on the interface of the second application or the interface of the background application, the electronic device displays the interface of the third application in the first display area, displays the interface of the background application in the second display area, and displays, in the third display area, an interface of a background application that is ranked second in the background task queue.

In other words, in this example, the user continuing to perform the third gesture may trigger the electronic device to display, in the foreground, the interface of the background application that is ranked second in the background task queue. In this example, the third gesture may be pressing the preset position of the interface of the second application with two fingers and sliding away from the interface of the background application; or pressing a preset position of the interface of the background application with two fingers and sliding toward the interface of the second application.

Second, the electronic device displays the interface of the first application in the first display area, displays the interface of the second application in the second display area, and displays the interface of the third application in the third display area. In response to a third gesture performed by the user on the interface of the first application or the interface of the third application, the electronic device may display an interface of a background application in the first display area, display the interface of the second application in the second display area, and display the interface of the third application in the third display area.

In other words, in this example, the electronic device can switch display between the interface of the first application and the interface of the background application, and specifically, display the interface of the background application in a display area in which the interface of the first application is displayed.

For example, the third gesture is touching and holding the preset position of the interface of the third application with a single finger, and pressing the preset position of the interface of first application and sliding away from the interface of the third application.

Third, the electronic device displays the interface of the first application in the first display area, displays the interface of the second application in the second display area, and displays the interface of the third application in the third display area. In response to a third gesture performed by the user on the interface of the second application, the electronic device may display the interface of the first application in the first display area, display an interface of a background application in the second display area, and display the interface of the third application in the third display area.

For example, the third gesture is pressing the preset position of the interface of the second application with a single finger and sliding in a first direction, where the first direction is parallel to a split-screen divider, and the split-screen divider is a split-screen divider between the second display area and the first display area.

In a possible implementation, the interface of the first application, the interface of the second application, and the interface of the third application are displayed in the following form: a split screen or a floating window. The following separately describes a process in which the electronic device switches display between two floating windows and a process in which the electronic device switches display between a split screen and a floating window.

### Scenario 1: Switch display between two floating windows

When the interface of the first application and the interface of the second application are displayed as floating windows, the interface of the first application corresponds to a first floating window, and the interface of the second application corresponds to a second floating window. The first floating window is at a first position of a display screen of the electronic device, in other words, the first floating window is at a first position in the first display area. The second floating window is at a second position of the display screen, in other words, the second floating window is at a second position in the second display area. A size of the first floating window is a first size, and a size of the second floating window is a second size.

In some embodiments, in response to a fourth gesture performed by the user on the first floating window or the second floating window, the electronic device may display the second floating window of the second size at the first position, and display the first floating window of the first size at the second position. In other words, the user performing the fourth gesture may trigger the electronic device to switch display between the first floating window and the second floating window. Specifically, after positions of the two floating windows are swapped, the floating windows are still in original sizes. For example, the first floating window is displayed at the second position, and the second floating window is displayed at the first position.

In some embodiments, in response to a fourth gesture performed by the user on the first floating window or the second floating window, the electronic device may display the second floating window of the first size at the first position, and display the first floating window of the second size at the second position. In other words, the user performing the fourth gesture may trigger the electronic device to switch display between the first floating window and the second floating window. Specifically, after positions of the two floating windows are swapped, their sizes are also swapped. For example, the first floating window is displayed at the second position, and the size of the first floating window changes to the second size; and the second floating window is displayed at the first position, and the size of the second floating window changes to the first size.

### Scenario 2: Switching display between a floating window and a split screen

When the interface of the first application is displayed as a floating window and the interface of the second application is displayed in split-screen mode, the interface of the first application corresponds to a first floating window, where the first floating window is at a first position of a display screen of the electronic device, and a size of the first floating window is a first size.

In some embodiments, in response to a fifth gesture performed by the user on the first floating window or the interface of the second application, the electronic device may display the interface of the second application in split-screen mode in the first display area, and display the first floating window of the first size in the second display area, where a relative position of the first floating window in the second display area is the same as a relative position of the first position in the first display area.

In other words, in this example, when the electronic device switches display between the floating window and the split-screen interface, only display areas of the floating window and the split-screen interface are swapped. For example, the interface of the second application is displayed in split-screen mode in the first display area, and the first floating window of the first size is displayed in the second display area, and display styles of the floating window and the split-screen interface are unchanged. The display style may be split-screen or floating window.

In some embodiments, in response to a fifth gesture performed by the user on the first floating window or the interface of the second application, the electronic device may display a second floating window of the first size at the first position, and display the interface of the first application in split-screen mode in the second display area, where the second floating window corresponds to the interface of the second application.

In other words, in this example, when the electronic device switches display between the floating window and the split-screen interface, not only display areas of the floating window and the split-screen interface are swapped, but also display styles of the floating window and the split-screen interface are swapped. For example, when the interface of the second application is displayed as a floating window, the electronic device may display the second floating window of the first size in the first display area. In addition, when the first floating window may be displayed in split-screen mode, the electronic device may display the interface of the first application in split-screen mode in the second display area.

In this embodiment of this application, the electronic device may support switching between two split-screen interfaces, two floating windows, or one floating window and one split-screen interface. In addition, when the electronic device switches display between two application interfaces, this application provides a plurality of display switching manners, which have a wide range of applications and offer high flexibility.

In a possible implementation, this application further provides a method for selecting a display area of an application interface by a user. Refer to the following descriptions.

The electronic device may display an interface of a first desktop in the first display area, display an interface of a second desktop in the second display area, and display an interface of a third desktop in the third display area, where the interface of the first desktop includes an icon of the first application. The electronic device may display the interface of the first application in the second display area in response to a sixth gesture performed by the user on the icon of the first application, where the sixth gesture indicates to display the interface of the first application in the second display area.

For example, the sixth gesture is performing a short press on the icon of the first application, and dragging the icon of the first application to the second display area. It should be noted that the short press may be understood as that duration of pressing the icon of the first application is less than a threshold. It should be noted that, in this embodiment of this application, a setting of the duration of pressing the icon of the first application is different from that of tapping the icon of the first application to trigger start of the first application.

For example, the sixth gesture is sliding the icon of the first application in the first direction, and selecting the second display area from an area option, where sliding in the first direction is used to trigger the electronic device to display the area option, the first direction is parallel to the split-screen divider, and the split-screen divider is a split-screen divider between the second display area and the first display area. In other words, when the user slides the icon of the first application in the first direction, the electronic device may display the area option. Then the user may select the second display area from the area option. In this way, the electronic device may display the interface of the first application in the second display area.

According to a second aspect, an embodiment of this application provides an electronic device. The electronic device may include a processor and a memory. The memory is configured to store computer-executable program code, where the program code includes instructions; and when the processor executes the instructions, the instructions enable the electronic device to perform the method according to the first aspect.

According to a third aspect, an embodiment of this application provides an electronic device. The electronic device may include a unit, a module, or a circuit configured to perform the method according to the first aspect.

According to a fourth aspect, an embodiment of this application provides a computer program product including instructions. When the computer program product runs on a computer, the computer is enabled to perform the method according to the first aspect.

According to a fifth aspect, an embodiment of this application provides a computer-readable storage medium. The computer-readable storage medium stores instructions. When the instructions are run on a computer, the computer is enabled to perform the method according to the first aspect.

For beneficial effects of the possible implementations of the second aspect to the fifth aspect, refer to the beneficial effects brought by the first aspect. Details are not described herein again.

### BRIEF DESCRIPTION OF DRAWINGS

FIG. 1A to FIG. 1C are example diagrams of a change of a physical state of an electronic device according to an embodiment of this application;
FIG. 2 is a diagram of a physical state of an electronic device according to an embodiment of this application;
FIG. 3 is a diagram of an interface of an electronic device according to an embodiment of this application;
FIG. 4 is a diagram of another interface of an electronic device according to an embodiment of this application;
FIG. 5 is a diagram of another interface of an electronic device according to an embodiment of this application;
FIG. 6 is a diagram of a structure of an electronic device according to an embodiment of this application;
FIG. 7A is a diagram of an interface change of an electronic device according to an embodiment of this application;
FIG. 7B(1)a and FIG. 7B(1)b are diagrams of another interface change of an electronic device according to an embodiment of this application;

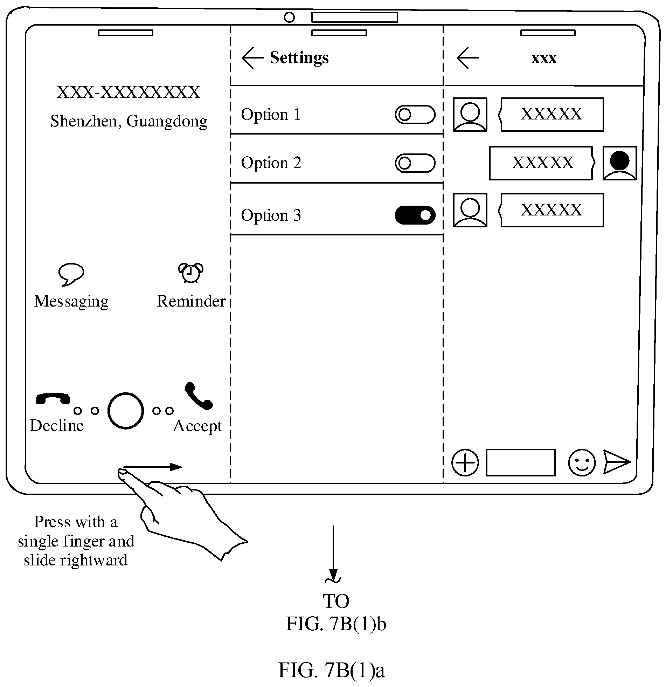

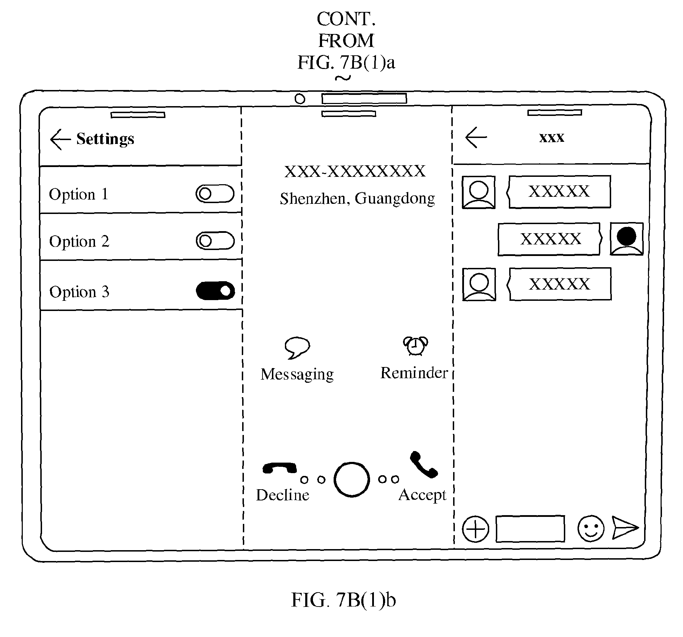

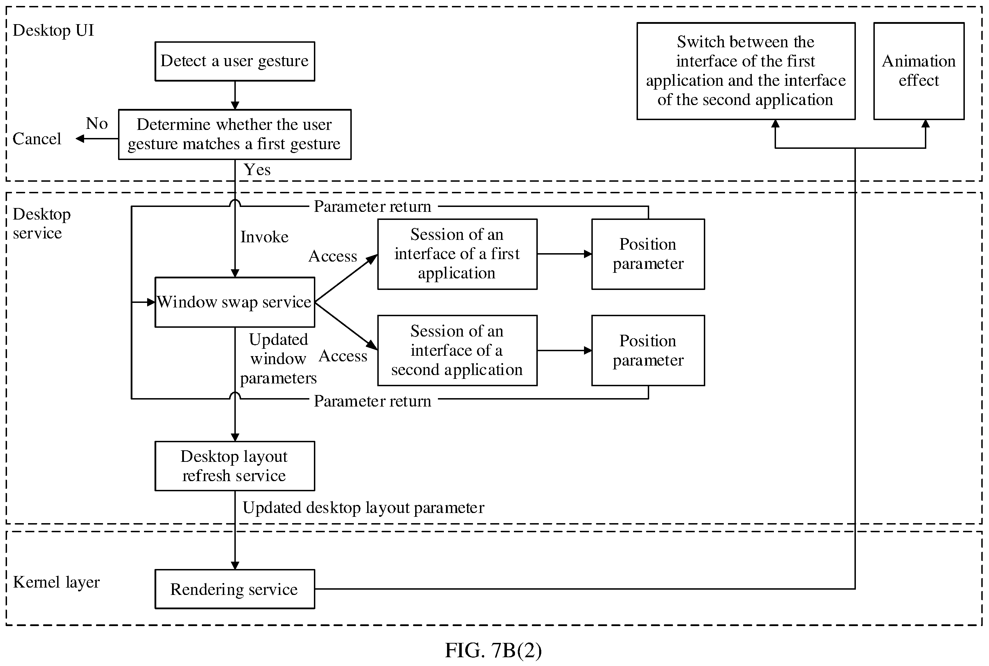

FIG. 7B(2) is a schematic flowchart of application interface switching according to an embodiment of this application;

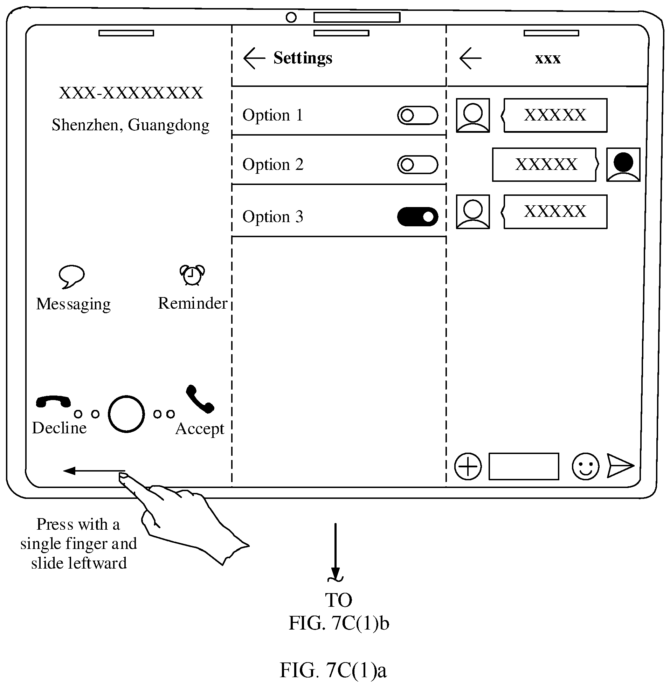

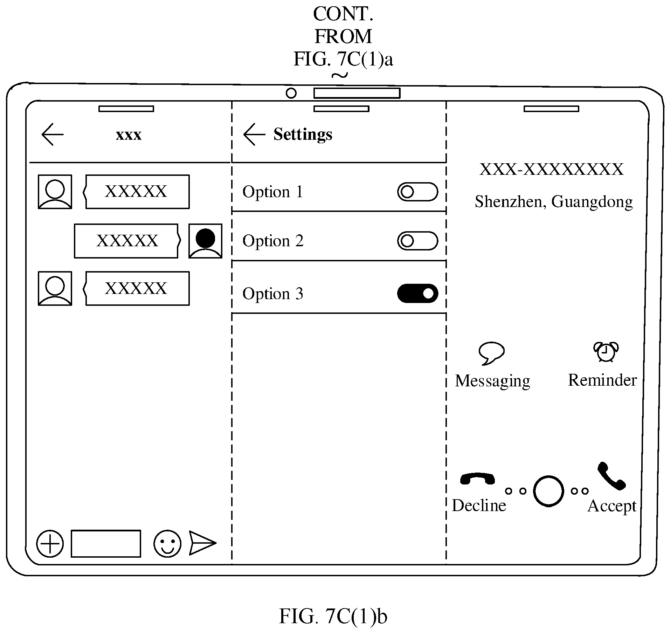

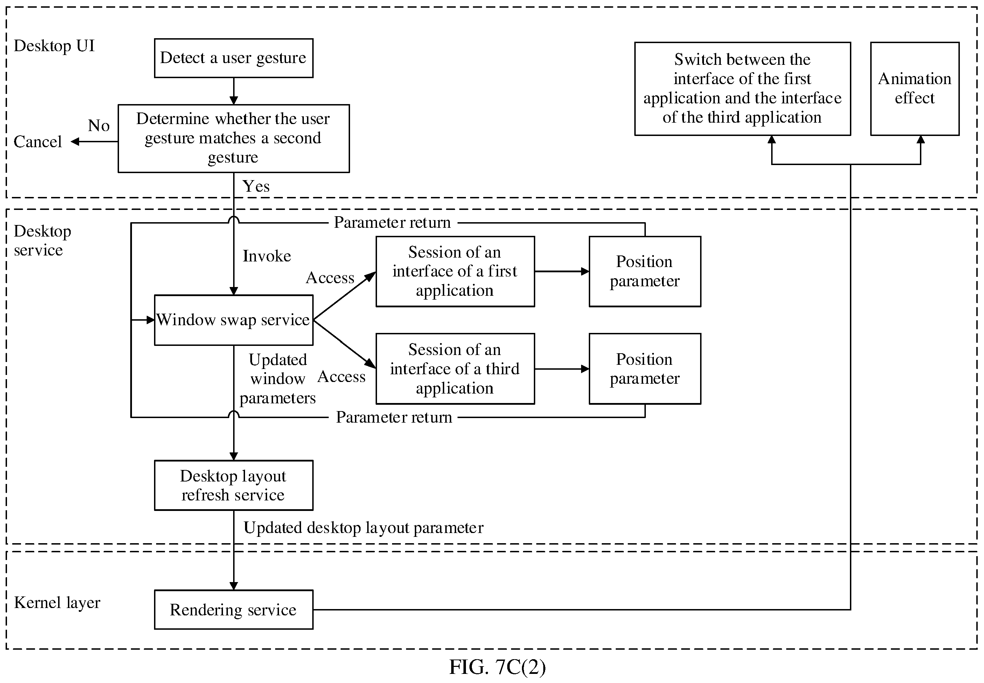

FIG. 7C(1)a and FIG. 7C(1)b are diagrams of another interface change of an electronic device according to an embodiment of this application;
FIG. 7C(2) is another schematic flowchart of application interface switching according to an embodiment of this application;

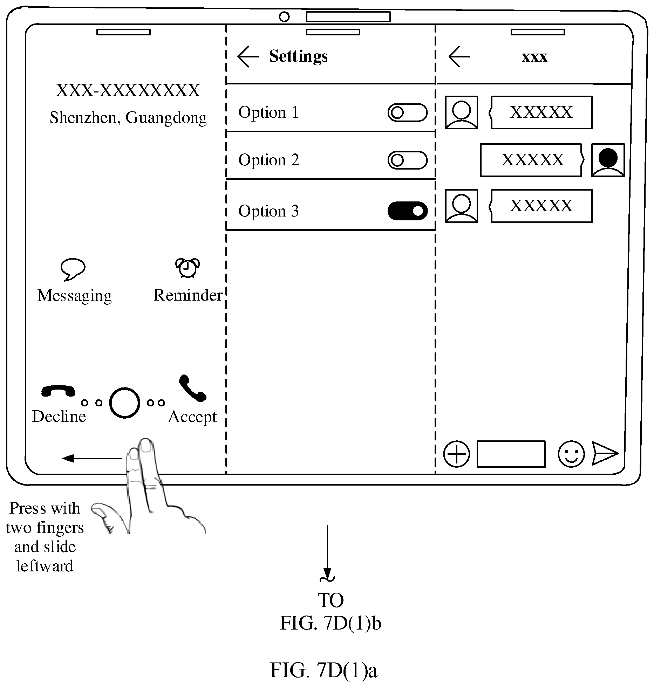

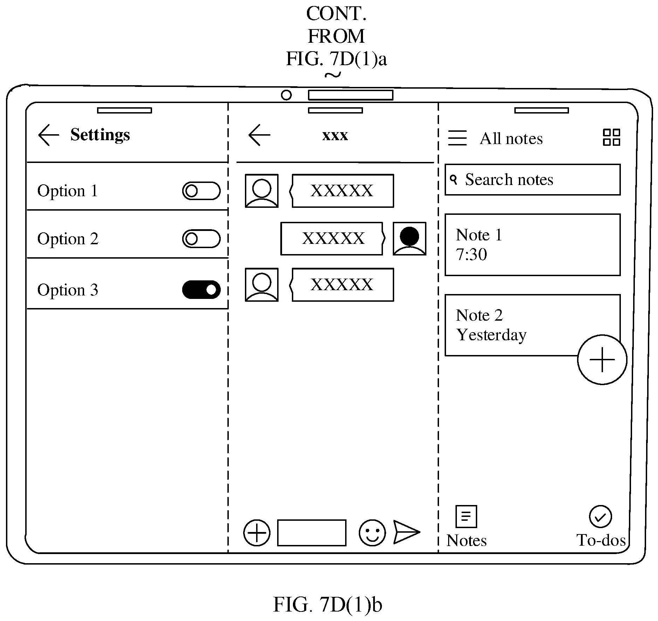

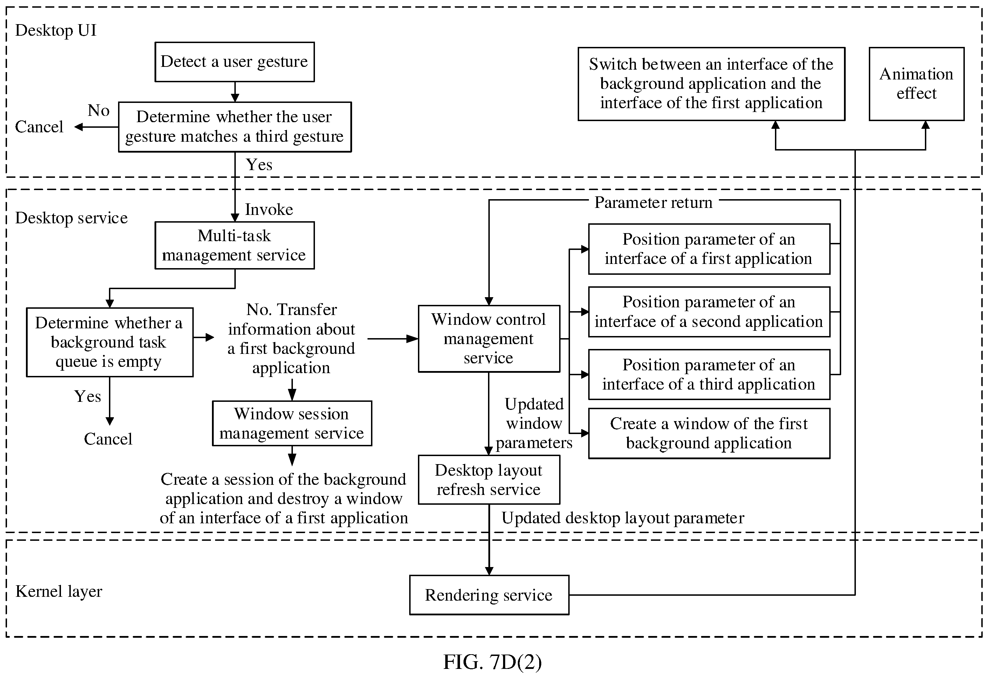

FIG. 7D(1)a and FIG. 7D(1)b are diagrams of another interface change of an electronic device according to an embodiment of this application;
FIG. 7D(2) is another schematic flowchart of application interface switching according to an embodiment of this application;

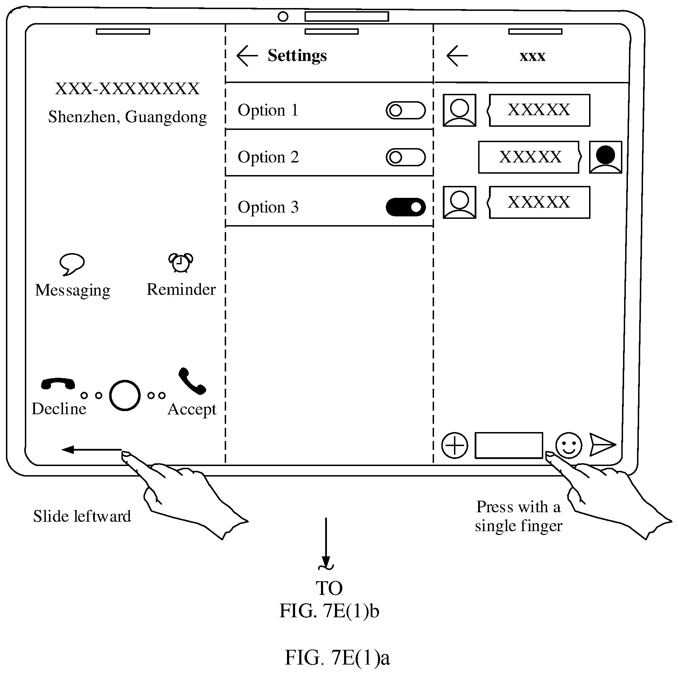

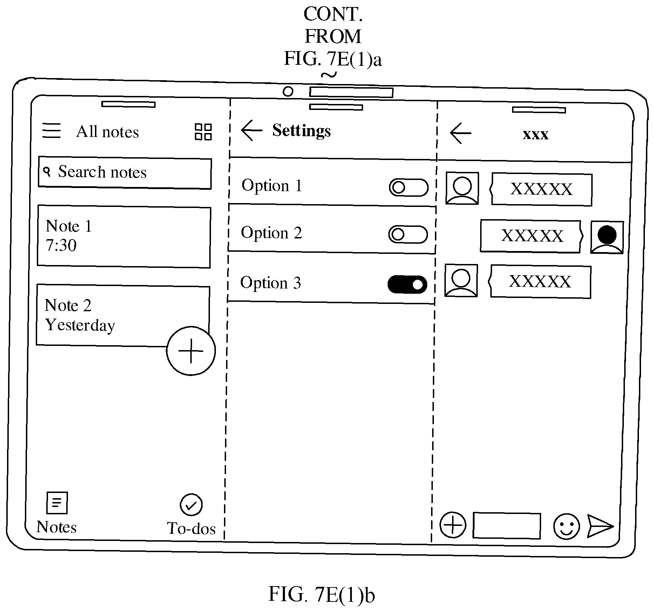

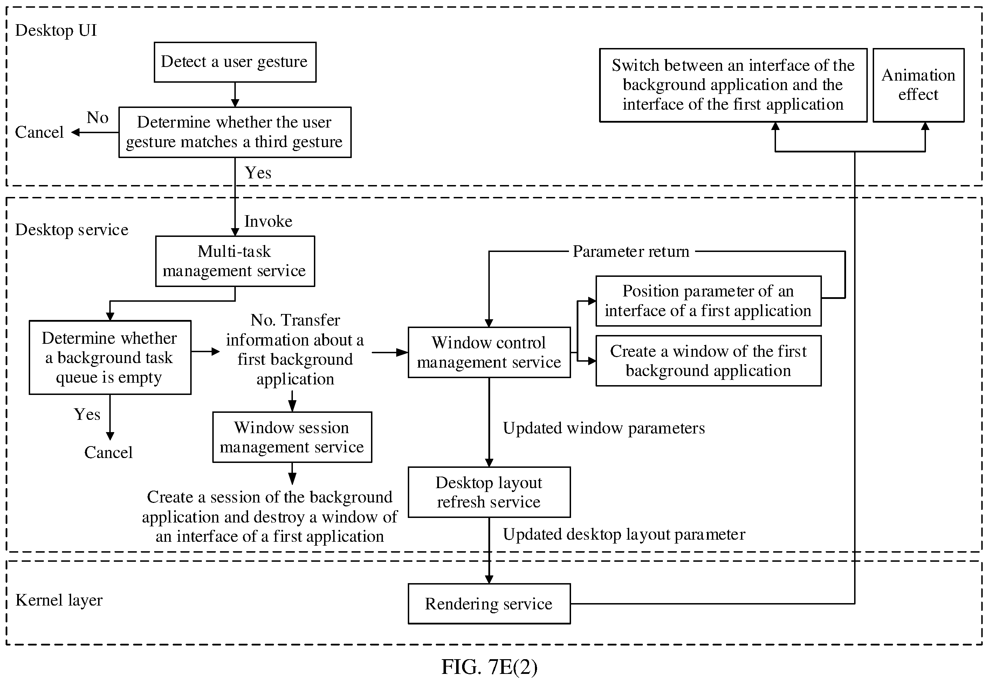

FIG. 7E(1)a and FIG. 7E(1)b are diagrams of another interface change of an electronic device according to an embodiment of this application;
FIG. 7E(2) is another schematic flowchart of application interface switching according to an embodiment of this application;

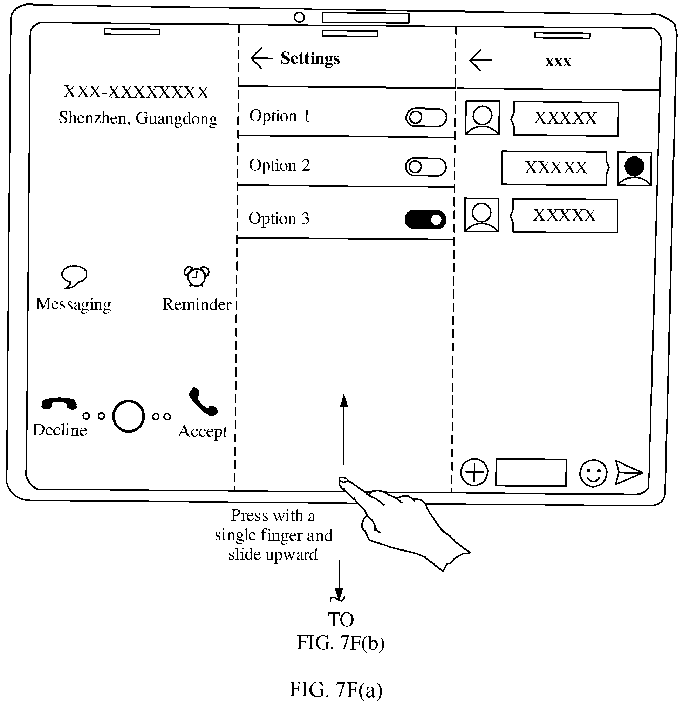

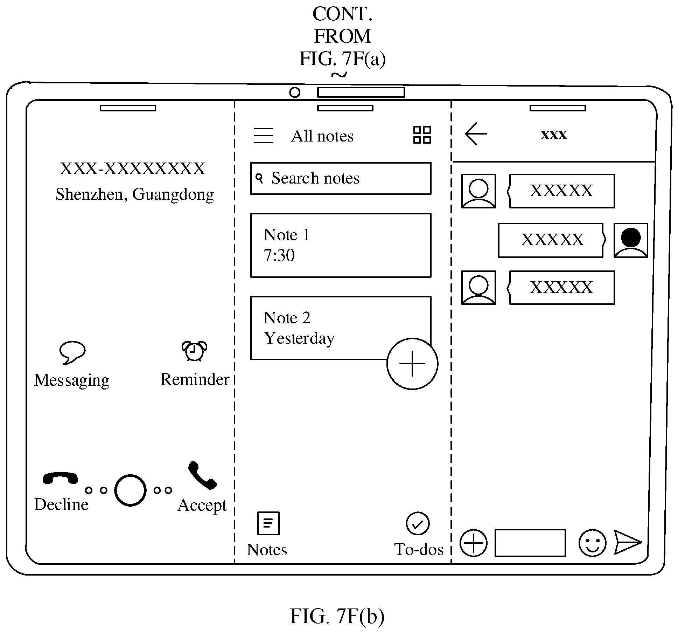

FIG. 7F(a) and FIG. 7F(b) are diagrams of another interface change of an electronic device according to an embodiment of this application;

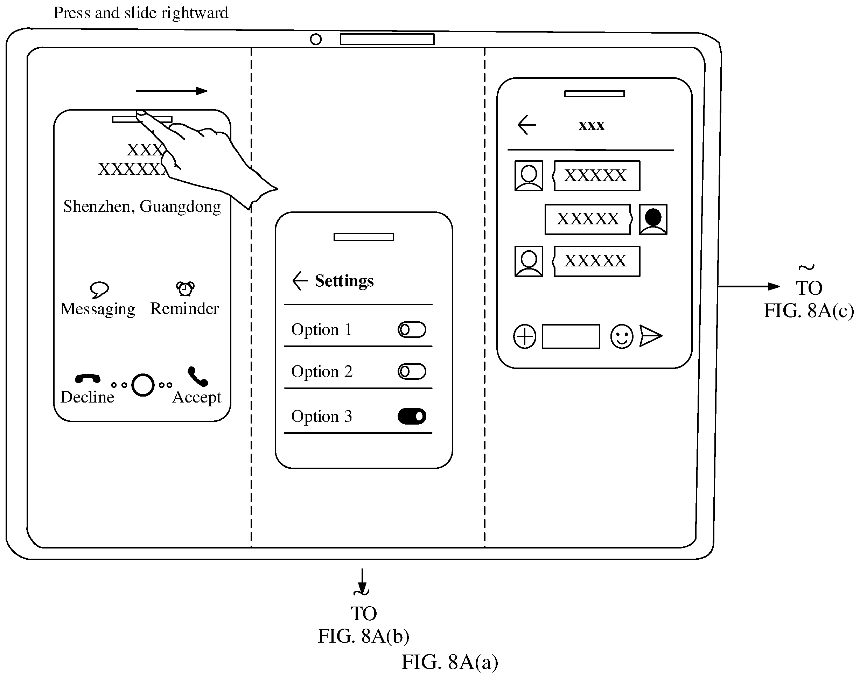

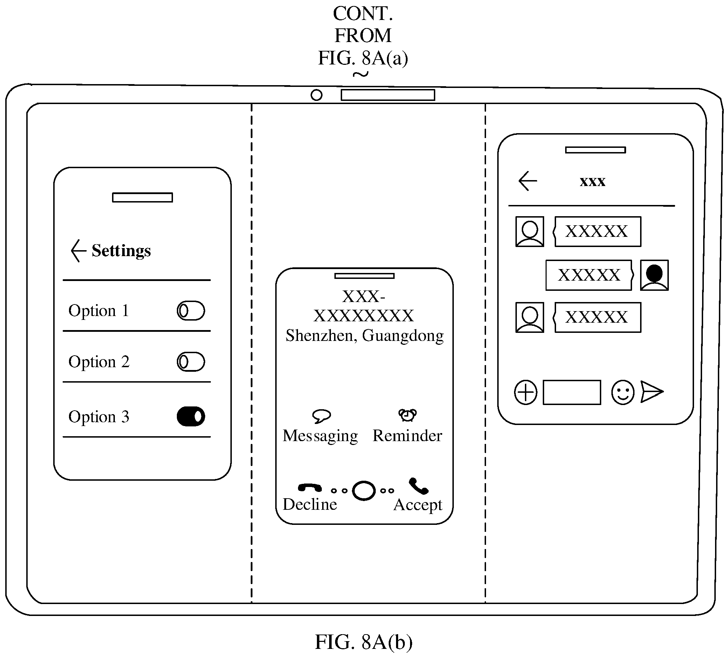

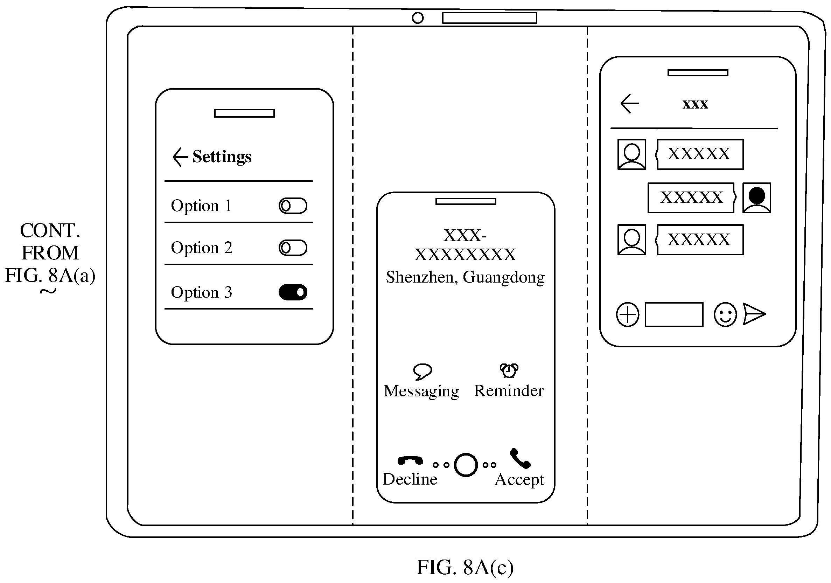

FIG. 8A(a) to FIG. 8A(c) are diagrams of another interface change of an electronic device according to an embodiment of this application;

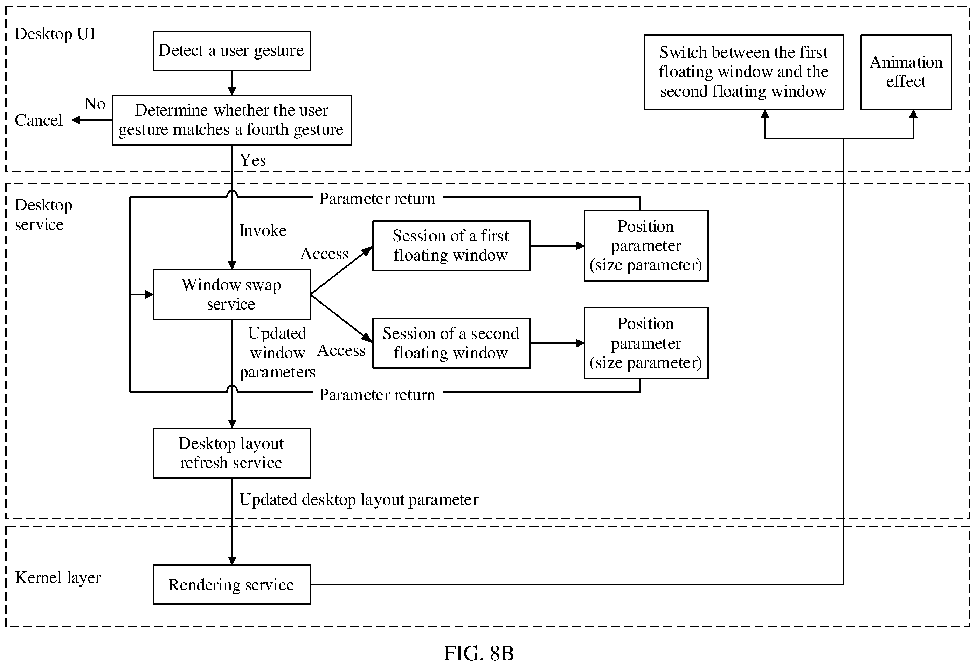

FIG. 8B is another schematic flowchart of application interface switching according to an embodiment of this application;

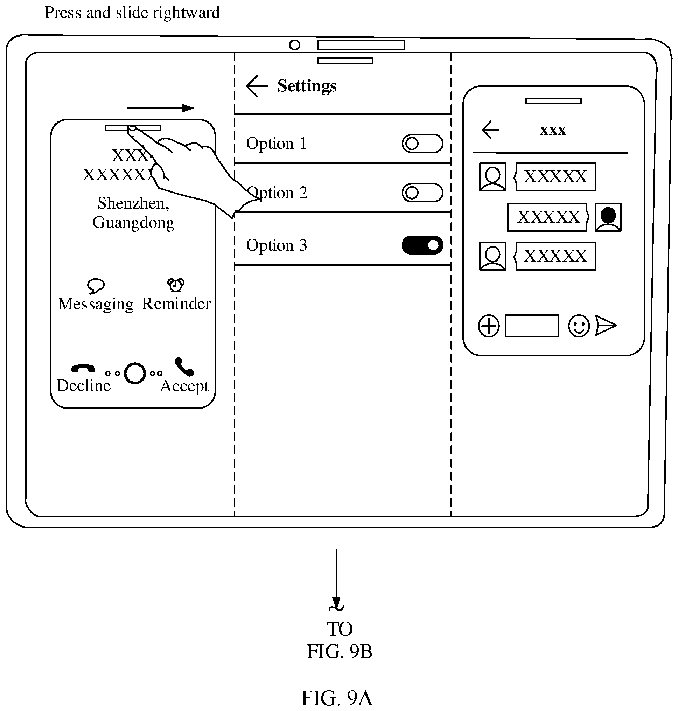

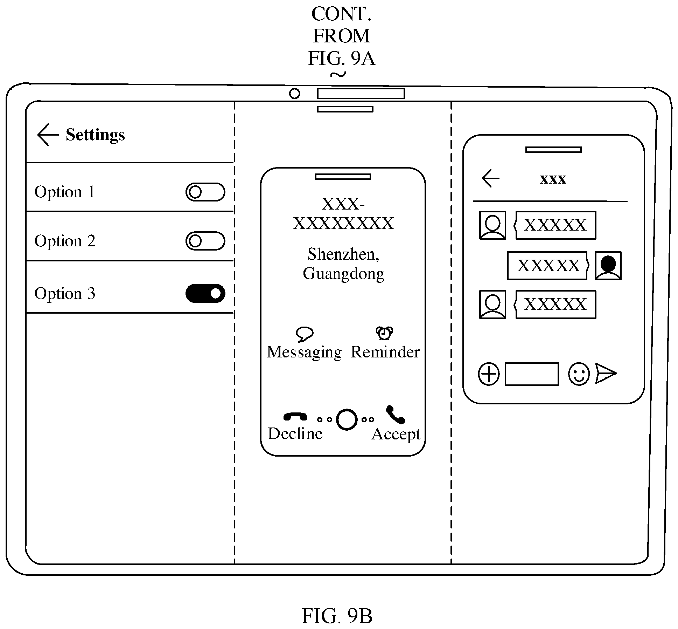

FIG. 9A and FIG. 9B are diagrams of another interface change of an electronic device according to an embodiment of this application;

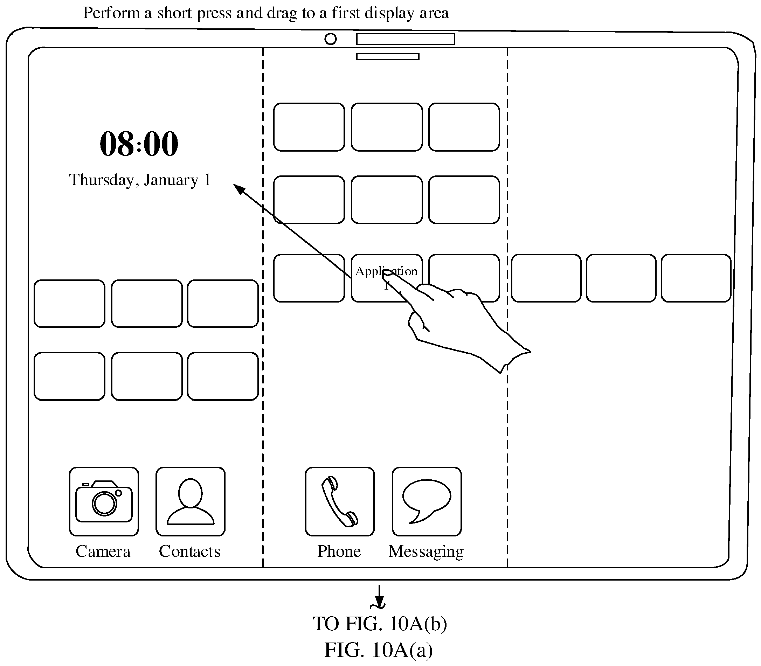

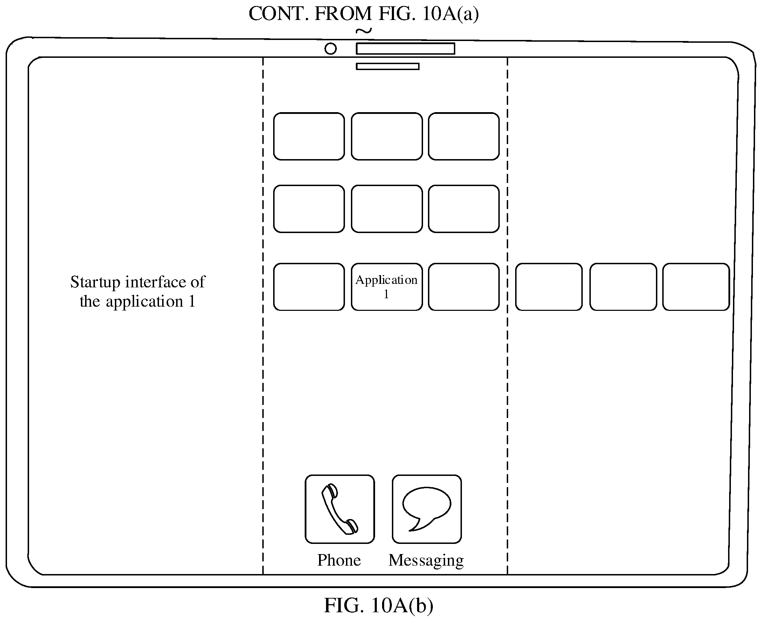

FIG. 10A(a) and FIG. 10A(b) are diagrams of another interface change of an electronic device according to an embodiment of this application;

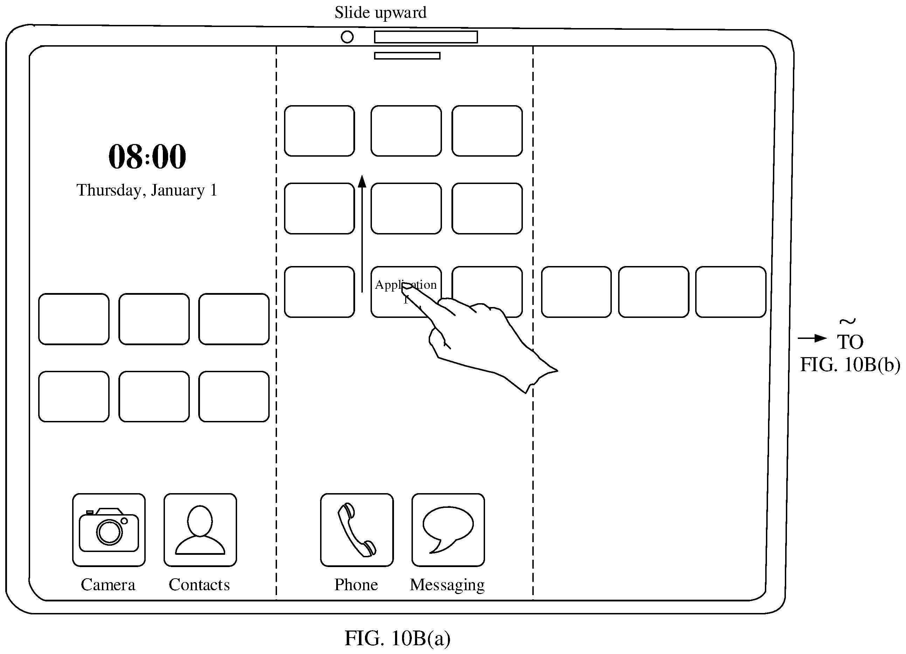

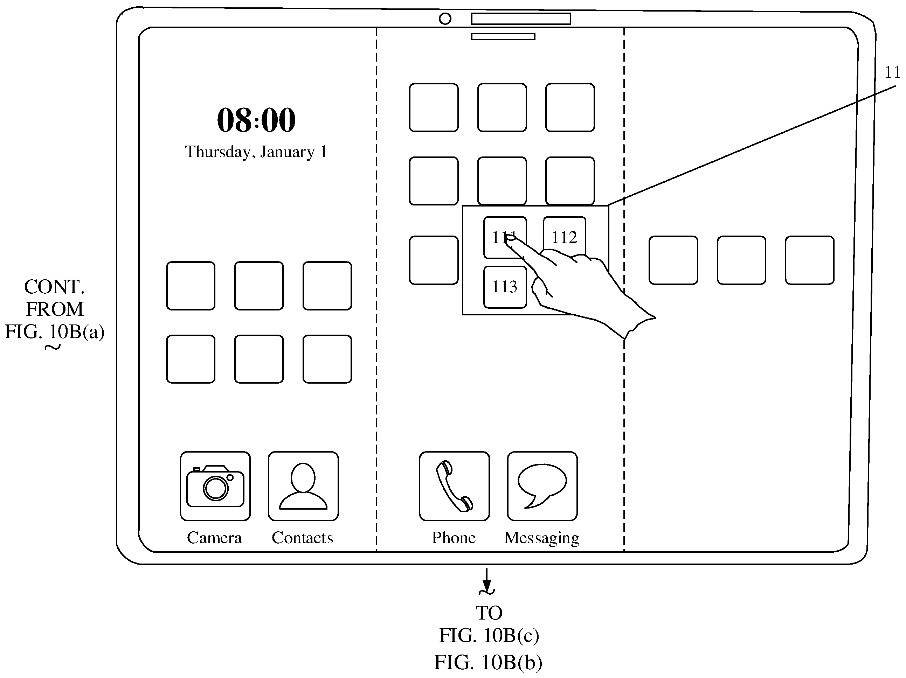

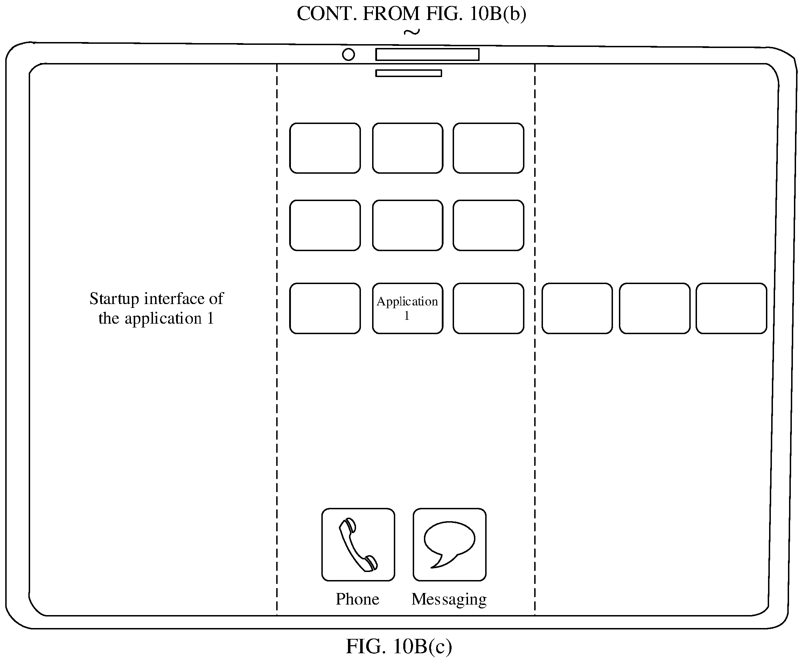

FIG. 10B(a) to FIG. 10B(c) are diagrams of another interface change of an electronic device according to an embodiment of this application;

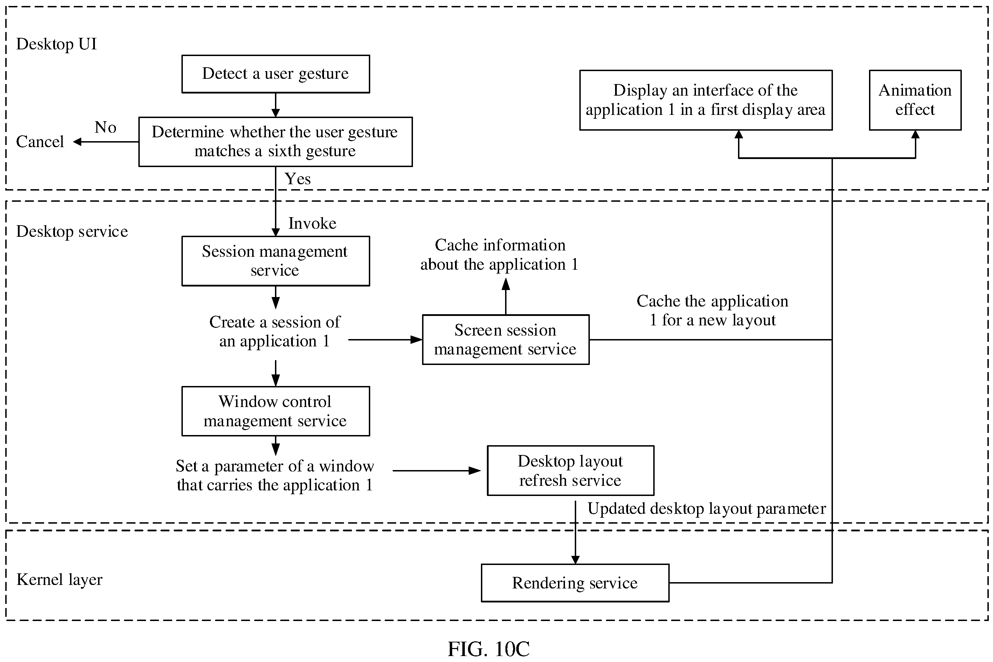

FIG. 10C is a schematic flowchart of starting an application according to an embodiment of this application; and

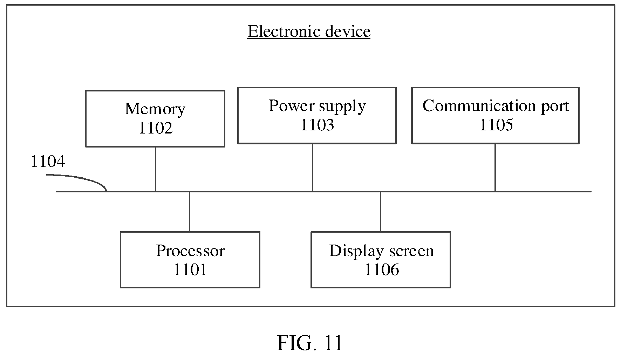

FIG. 11 is a diagram of another structure of an electronic device according to an embodiment of this application.

### DESCRIPTION OF EMBODIMENTS

An electronic device in embodiments of this application includes a display screen, where the display screen is a flexible screen and is foldable. The electronic device in embodiments of this application may be referred to as a foldable screen device or a foldable device. For example, the electronic device may be a mobile phone, a tablet computer (portable Android device, PAD), a personal digital assistant (personal digital assistant, PDA), a handheld device having a wireless communication function, a compute device, a vehicle-mounted device or a wearable device, a virtual reality (virtual reality, VR) terminal device, an augmented reality (augmented reality, AR) terminal device, a wireless terminal in industrial control (industrial control), a wireless terminal in a smart home (smart home), or the like. A form of the electronic device is not specifically limited in embodiments of this application.

A foldable screen device in embodiments of this application may be a tri-fold device, a quad-fold device, or a higher-order foldable device. It should be understood that a display method provided in embodiments of this application is also applicable to a dual-fold device. The tri-fold device may include two folding edges or folding axes. The tri-fold device may be folded twice along the folding edges or folding axes. After two folds, a tri-fold screen is brought into three screens. The three screens may be independent screens, or may be a complete screen of an integrated structure, merely folded into two parts. Similarly, the quad-fold device or the higher-order foldable device may be folded more times, resulting in a larger quantity of screens after folds. The following embodiments use the tri-fold device as an example for description.

The tri-fold device is used as an example. The tri-fold device may include at least one display screen of an integrated structure. A folding manner of the tri-fold device may include inward folding and/or outward folding. The folding manner of the tri-fold device is not limited in embodiments of this application. A physical state of the tri-fold screen may include a folded state, an unfolded state, and a semi-folded state.

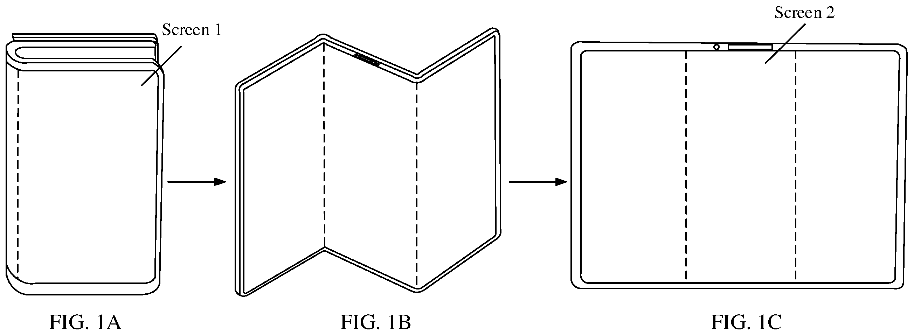

As shown in FIG. 1A, when the tri-fold device is in the folded state, a screen 1 may be turned on, and the screen 1 may be used by a user. In a process in which the user unfolds the tri-fold device, the tri-fold device is in the semi-folded state, where the semi-folded state is any physical state between the folded state and the unfolded state. As shown in FIG. 1B, when the tri-fold device is in the semi-folded state, a part or an entirety of a screen 2 of the tri-fold device is turned on. The user continues to unfold the tri-fold device to the unfolded state. As shown in FIG. 1C, an entirety of the screen 2 may be turned on, and the screen 2 may be used by the user.

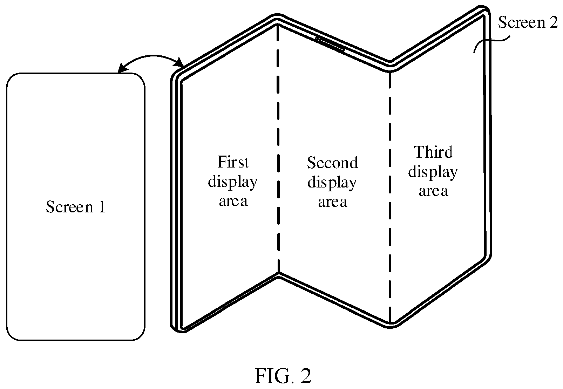

In some embodiments, based on different settings of the tri-fold device, the screen 1 may be a part of the screen 2, or the screen 1 and the screen 2 may be independent screens. It should be understood that in FIG. 1A to FIG. 1C, an example in which the screen 1 is a screen at the rightmost of the screen 2 is used for description, and in FIG. 2, an example in which the screen 1 is independent of the screen 2 is used for description. It should be understood that FIG. 2 shows only the tri-fold device in the semi-folded state.

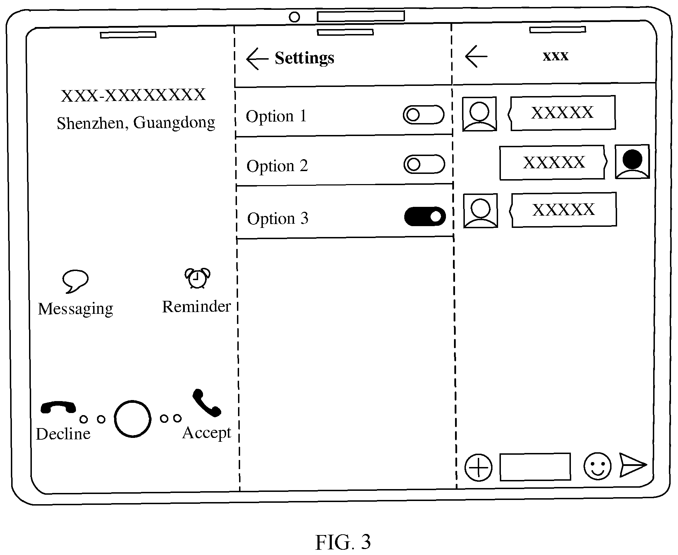

The display method provided in embodiments of this application may be applied to a scenario in which the foldable screen device is in the unfolded state. As shown in FIG. 3, when the tri-fold device is in the unfolded state, the tri-fold device may include three display areas: a first display area, a second display area, and a third display area. With reference to FIG. 1C and FIG. 2, in other words, the screen 2 may include the first display area, the second display area, and the third display area. The second display area is located between the first display area and the third display area. A folding edge or a folding axis (or a split-screen divider) exists between two adjacent display areas. The tri-fold device may be folded along the folding edge or the folding axis. In FIG. 3, dashed lines represent the folding edge or the folding axis (or the split-screen divider). It should be understood that the user may adjust a size of the display area by operating the split-screen divider. Details are not described in this embodiment of this application.

In some embodiments, an interface of a different application may be displayed in each display area. In this way, the user may simultaneously view the interfaces of the different applications, so that multi-application operations of the user may be implemented. For example, the user may simultaneously view a video, take notes, look up words, and the like. An interface of a first application may be displayed in the first display area, an interface of a second application may be displayed in the second display area, and an interface of a third application may be displayed in the third display area. The first application, the second application, and the third application are different from each other. For example, in FIG. 3, an example is used in which an interface of a phone application is displayed in the first display area, an interface of a settings application is displayed in the second display area, and an interface of a social application is displayed in the third display area.

In some embodiments, among the three display areas, there may be at least two display areas in which an interface of a same application is displayed. For example, a main interface of the social application may be displayed in the first display area, a settings interface of the social application may be displayed in the second display area, and the interface of the phone application may be displayed in the third display area.

It should be understood that, in the following embodiments, an example in which the interfaces of the different applications are displayed in the three display areas of the tri-fold device to describe the display method provided in embodiments of this application.

In some embodiments, when an application interface is displayed in the display area, the application interface may occupy an entirety or a part of the display area. For example, in FIG. 3, an example in which an interface of each application occupies an entirety of the display area is used. In this example, it can also be said that the tri-fold device may display interfaces of a plurality of applications in split-screen mode.

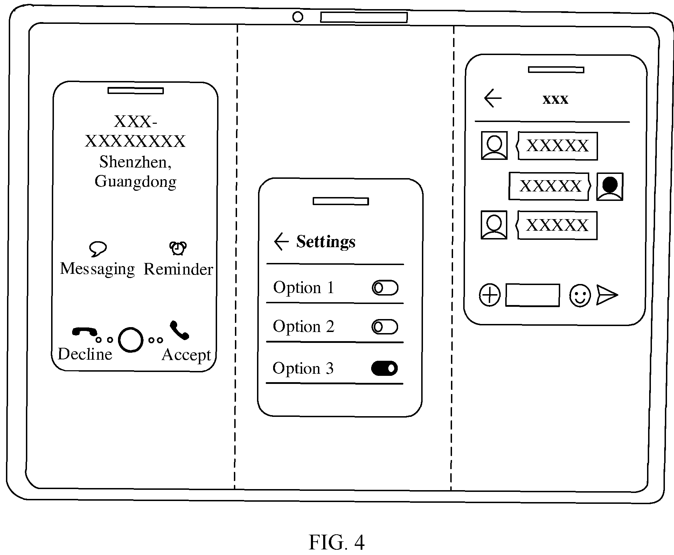

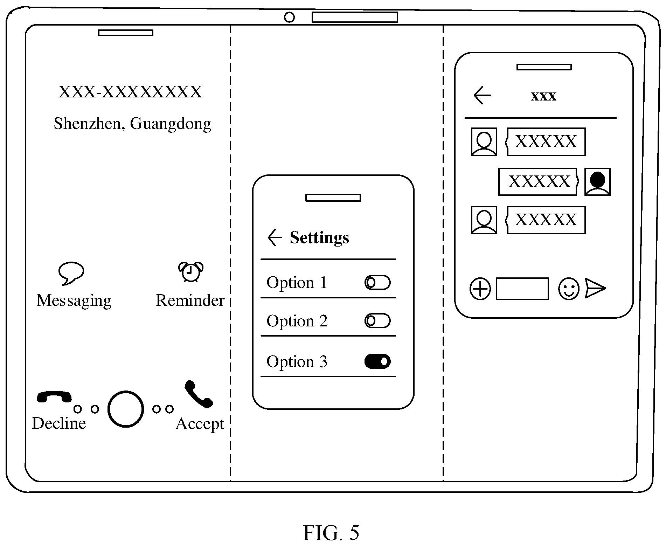

In FIG. 4, an example in which an interface of each application occupies a part of the display area is used. In this example, it can also be said that the tri-fold device may display a floating window of the application in each display area. In FIG. 5, an example in which interfaces of some applications occupy an entirety of the display area, and an interface of the remaining application occupies a part of the display area is used. In other words, the interfaces of the applications may be displayed in the some display areas in split-screen mode, and a floating window of the remaining application may be displayed in the remaining display area.

In conclusion, the tri-fold device may display an application interface in each display area in different styles. In an actual application scenario, the user may need to switch between application interfaces. Switching between application interfaces may include, for example, changing a display position of an application interface, and switching a background application to the foreground for display. Based on the needs for switching between application interfaces, the tri-fold device, the quad-fold device, and even the higher-order foldable device feature larger screen sizes in an unfolded state. Therefore, ensuring convenient user operations to meet user requirements remains a pressing issue that needs to be resolved.

An embodiment of this application provide a display method. The user may perform an operation on a multi-fold device to implement switching between application interfaces, so as to meet user requirements. The multi-fold device may include a tri-fold device, a quad-fold device, and even a higher-order foldable device. In some embodiments, the multi-fold device may include a dual-fold device.

Before the display method provided in embodiments of this application is described, a structure of the electronic device is first described.

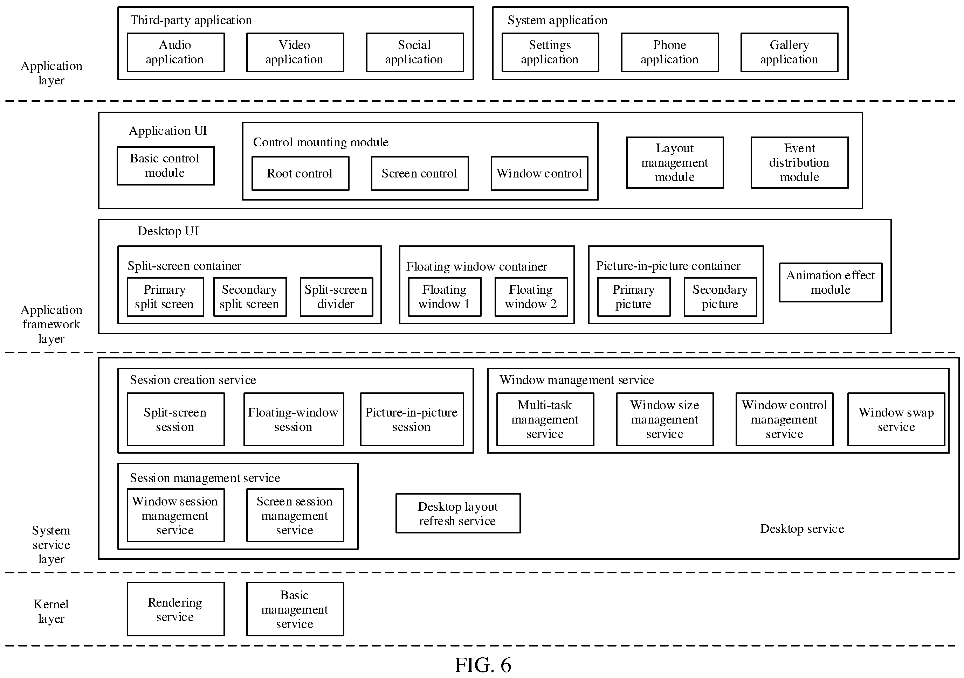

FIG. 6 is a diagram of a structure of an electronic device according to an embodiment of this application. A software system of the electronic device may use a layered architecture, an event-driven architecture, a microkernel architecture, a microservice architecture, or a cloud architecture. The layered architecture divides the software system of the electronic device into several layers. Each layer has a clear role and task. The layers communicate with each other through a software interface.

In some embodiments, the electronic device may include an application (application) layer, an application framework (application framework) layer, a system service layer, and a kernel (kernel) layer. Layers of the software structure of the electronic device are not limited in embodiments of this application. The modules included in the layers in the following embodiments are modules in embodiments of this application. Neither the modules included in the layers nor deployment levels of the modules (provided as illustrative examples) constitute limitations on the structure of the electronic device.

The application layer may include a series of applications. The application layer runs an application by invoking an application programming interface (application programming interface, API) provided by the application framework layer.

In some embodiments, the application layer may include a system application and a third-party application. For example, the system application may include a settings application, a phone application, a gallery application, a messaging application, and the like. The third-party application may include an audio application, a video application, a social application, and the like. It should be understood that FIG. 6 shows some applications.

The application framework layer may provide an API and a programming framework for an application at the application layer. The application framework layer includes some predefined functions. As shown in FIG. 6, the application framework layer may include an application user interface (user interface, UI) system and a desktop UI system. The application UI system is used to assist the electronic device in displaying an application interface, and the desktop UI system is used to assist the electronic device in displaying a desktop interface.

As shown in FIG. 6, in some embodiments, the application UI system may include a basic control module, a control mounting module, a layout management module, and an event distribution module.

The basic control module is configured to manage a basic control on an application UI. The basic control may include but is not limited to a picture, a button, a text, an input box, a progress bar, a scroll box, a joystick, and the like on the application UI. The control mounting module is configured to manage a mounting control, where the mounting control may include but is not limited to a root control, a screen control, a window control, and the like. The layout management module is configured to manage a layout of controls on the application UI. The event distribution module is configured to implement distribution of an input event, so that an application can respond to the input event in a timely manner. The input event may include but is not limited to a touch event, a slide event, a touch and hold event, and the like.

The desktop UI system is responsible for providing different types of containers and animation effects. Before an application interface is displayed on the desktop, the desktop UI system may create a corresponding container, where various types of containers can be converted to each other. In addition, the desktop UI system may provide animation effects during window opening and switching, making the window opening and switching process smoother and more seamless.

As shown in FIG. 6, in some embodiments, the desktop UI system may include at least one type of container and an animation effect module. The at least one type of container may include but is not limited to a split-screen container, a floating window container, a picture-in-picture container, and the like.

The split-screen container is configured to store a split-screen interface displayed on the desktop interface. For example, refer to the example in FIG. 3. Three split-screen interfaces are displayed on the desktop interface, and the three split-screen interfaces include the interface of the phone application displayed in the first display area, the interface of the settings application displayed in the second display area, and the interface of the social application displayed in the third display area. Refer to the example in FIG. 5. A split-screen interface is displayed on the desktop interface, and the split-screen interface is the interface of the phone application displayed in the first display area.

In FIG. 6, an example is used in which the split-screen container includes a primary split screen, a secondary split screen, and a split-screen divider. The split-screen divider is used to separate two split screens. For example, the split-screen divider may be included between the primary split screen and the secondary split screen.

The floating window container is configured to store a floating window displayed on the desktop interface. For example, refer to the example in FIG. 4. Three floating windows are displayed on the desktop interface, and the three floating windows include a floating window of the phone application displayed in the first display area, a floating window of the settings application displayed in the second display area, and a floating window of the social application displayed in the third display area. Refer to the example in FIG. 5. Two floating windows are displayed on the desktop interface, and the floating windows include the floating window of the settings application displayed in the second display area, and the floating window of the social application displayed in the third display area.

In FIG. 6, an example is used in which the floating window container includes a floating window 1 and a floating window 2.

The picture-in-picture container is configured to store a picture-in-picture interface displayed on the desktop interface. The picture-in-picture interface may be understood as overlaying a floating window on a split-screen interface. For example, the interface of the phone application is displayed in split screen mode in the first display area, and a floating window of the social application is displayed on the interface of the phone application. For example, the floating window is a floating window of a video call interface. In this embodiment of this application, the picture-in-picture interface is not separately displayed. In some embodiments, the picture-in-picture interface may be considered as a split-screen interface, with a floating window overlaid on the split-screen interface. For a method for switching between picture-in-picture interfaces, refer to descriptions of switching between split-screen interfaces in the following embodiments.

In FIG. 6, an example is used in which the picture-in-picture container includes a primary picture and a secondary picture. For example, the floating window of the social application is displayed on the interface of the phone application, where the interface of the phone application may be considered as a primary picture, and the floating window of the social application may be considered as a secondary picture.

The animation effect module is configured to display, during switching between application interfaces, an animation effect of switching between the application interfaces. The animation effect may include but is not limited to a rebound animation effect, a full-screen animation effect, a spring animation effect, a dismissal animation effect, and the like. The animation effect of switching between the application interfaces is not limited in embodiments of this application.

The system service layer is used to provide a plurality of types of system services for the electronic device. The system service may include but is not limited to: an audio (audio) service, a video (video) service, a network service, a desktop service, and the like. It should be understood that FIG. 6 shows the desktop service in this embodiment of this application.

As shown in FIG. 6, the desktop service may include a session creation service, a session management service, a window management service, a desktop layout refresh service, and the like.

The session creation service is used to create a session. Each time an application is started and then enters a container, the session creation service creates an independent session for the application. For example, the session may include but is not limited to a split-screen session, a floating window session, and a picture-in-picture session. It should be understood that, for example, when the electronic device is to display an application interface in split screen mode in a display area, the session creation service may create a split-screen session. For example, when the electronic device is to display a floating window of an application interface in a display area, the session creation service may create a split-screen session.

In FIG. 6, an example is used in which the session creation service has created a split-screen session, a floating window session, and a picture-in-picture session.

The session management service is used to manage a session created by the session creation service. For example, the session management service may store session information of an interface of each application, destroy a session, and the like. The session information may include but is not limited to a position parameter, a size parameter, and the like of an application interface. The position parameter may indicate a position of the application interface on a display screen of the electronic device. The size parameter may indicate a size, a shape, and the like of the application interface (a split screen, a floating window, a picture-in-picture, or the like).

In some embodiments, the session management service may include a window session management service and a screen session management service. The window session management service is used to manage a window-related session that is already created by the session creation service. For example, the window session management service may manage the split-screen session, the floating window session, and the picture-in-picture session. The screen session management service is used to manage a desktop-related session. For example, the screen session management service may manage a desktop interface session.

The window management service is used to manage windows displayed on the desktop interface. Different windows may carry a same application interface or different application interfaces. For example, refer to the example in FIG. 3. The interface of the phone application may be carried in a window (for example, a window 1), and the interface of the settings application may be carried in another window (for example, a window 2).

In some embodiments, the window management service may include a multi-task management service, a window size management service, a window control management service, and a window swap service.

The multi-task management service is used to manage applications running on the electronic device. The applications running on the electronic device include a background application. The multi-task management service may manage a background task queue. The background task queue includes an application running in the background.

The window size management service is used to manage a size of a window. The window may be used to carry a split screen, a floating window, and a picture-in-picture. The window control management service is used to manage a control in a window. The control in the window may include but is not limited to a horizontal bar (bar) at the top of the window.

The window swap service may be used to obtain information about a to-be-switched (swapped) window, and switch the information about the to-be-switched window. For example, the information about the window may include but is not limited to a position parameter and a size parameter of the window. For example, if the to-be-switched window is a split-screen interface 1 displayed in a display area 1 and a split-screen interface 2 displayed in a display area 2, the information about the to-be-switched window may include a position parameter of the split-screen interface 1 and a position parameter of the split-screen interface 2. The position parameter of the split-screen interface 1 may include coordinates 1 of an upper left corner of the split-screen interface 1 in a coordinate system of the display screen of the electronic device. The position parameter of the split-screen interface 2 may include coordinates 2 of an upper left corner of the split-screen interface 2 in the coordinate system of the display screen of the electronic device.

The window swap service may swap the position parameter of the split-screen interface 1 and the position parameter of the split-screen interface 2. For example, the window swap service changes the position parameter of the split-screen interface 1 to the coordinates 2, and changes the position parameter of the split-screen interface 2 to the coordinates 1. The window swap service is further used to send information about a switched window to the desktop layout refresh service. For example, the information about the switched window includes the position parameter (coordinates 2) of the split-screen interface 1 and the position parameter (coordinates 1) of the split-screen interface 2. In some embodiments, the information about the switched window may also be referred to as an updated window parameter.

The desktop layout refresh service is used to rearrange the desktop based on the updated window parameter. For example, the desktop layout refresh service may determine, based on "the position parameter (coordinates 2) of the split-screen interface 1 and the position parameter (coordinates 1) of the split-screen interface 2", to display the split-screen interface 2 in the display area 1, and to display the split-screen interface 1 in the display area 2.

As shown in FIG. 6, in some embodiments, the kernel layer may include a rendering service and a basic management service. The rendering service may be used to render a window, so that the electronic device can display content in the window in a display area. The basic management service may be used to manage a life cycle of a process, a life cycle of a component, and the like. Functions of the basic management service are not described in embodiments of this application.

In some embodiments, the desktop layout refresh service is further used to send information about the rearranged desktop to the rendering service. The rendering service is used to re-render the desktop based on the information about the rearranged desktop, so that the electronic device displays the split-screen interface 2 in the display area 1, and displays the split-screen interface 1 in the display area 2. In some embodiments, the information about the rearranged desktop may be referred to as an updated desktop layout parameter.

It may be understood that the structure shown in FIG. 6 does not constitute a specific limitation on the electronic device. In some other embodiments of this application, the electronic device may include more or fewer components than those shown in the figure, or a combination of some components, or splits from some components, or a different component layout. The components shown in the figure may be implemented by hardware, software, or a combination of software and hardware.

The display method provided in embodiments of this application is described below with reference to specific embodiments. The following several embodiments may be combined with each other, and a same or similar concept or process may not be described repeatedly in some embodiments. It should be understood that, in the following embodiments, the display methods provided in embodiments of this application are sequentially described based on an application interface switching scenario.

### Scenario 1: Switching between split-screen interfaces

For example, an electronic device is a tri-fold device. When the tri-fold device is in an unfolded state, a first display area, a second display area, and a third display area may be included. The first display area, the second display area, and the third display area are adjacent to each other. For example, the first display area is adjacent to the second display area, the second display area is adjacent to the third display area, and the second display area is located between the first display area and the third display area. It should be understood that, in this embodiment of this application, an example is used in which the first display area, the second display area, and the third display area are arranged on the left, in the middle, and on the right. Alternatively, the first display area, the second display area, and the third display area may be arranged at the top, in the middle, and at the bottom. An arrangement manner of the display areas is not limited in embodiments of this application.

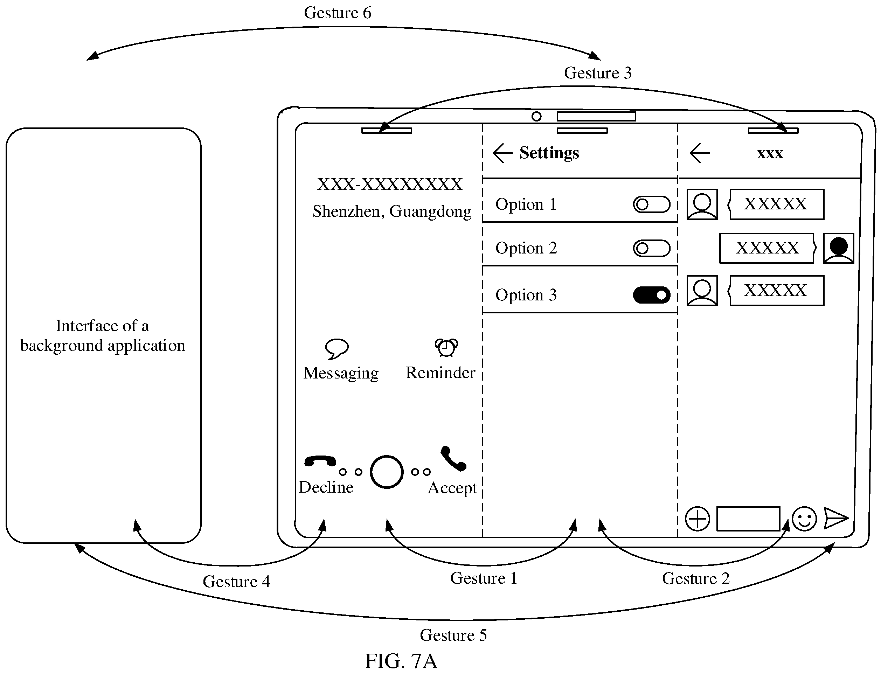

In this embodiment of this application, an interface of a first application may be displayed in the first display area, an interface of a second application may be displayed in the second display area, and an interface of a third application may be displayed in the third display area. The interface of the first application, the interface of the second application, and the interface of the third application may belong to a same application or different applications. In this embodiment of this application, an example in which the interface of the first application, the interface of the second application, and the interface of the third application belong to different applications is used for description. As shown in FIG. 7A, the interface of the first application may be an interface of a phone application, the interface of the second application may be an interface of a settings application, and the interface of the third application may be an interface of a social application. It should be understood that the application interfaces are displayed in split-screen mode in FIG. 7A. In some embodiments, an application interface in each display area shown in FIG. 7A may be referred to as a split-screen interface.

FIG. 7A shows several examples of switching between split-screen interfaces. Details are provided below.

Example 1: A gesture 1 is used to trigger switching between the interface of the first application and the interface of the second application. For example, when a user performs the gesture 1, the interface of the first application may be displayed in the second display area, and the interface of the second application may be displayed in the first display area.

Example 2: A gesture 2 is used to trigger switching between the interface of the second application and the interface of the third application. For example, when a user performs the gesture 2, the interface of the second application may be displayed in the third display area, and the interface of the third application may be displayed in the second display area.

Example 3: A gesture 3 is used to trigger switching between the interface of the first application and the interface of the third application. For example, when a user performs the gesture 3, the interface of the first application may be displayed in the third display area, and the interface of the third application may be displayed in the first display area.

Example 4: A gesture 4 is used to trigger switching between the interface of the first application and an interface of a background application. For example, when a user performs the gesture 4, the interface of the background application rather than the interface of the first application may be displayed in the first display area. Alternatively, for example, when a user performs the gesture 4, the interface of the second application may be displayed in the first display area, the interface of the third application may be displayed in the second display area, and the interface of a background application may be displayed in the third display area.

It should be understood that the interface of the background application is an interface of an application running in the background. When the interface of the first application is displayed in the first display area, the interface of the second application is displayed in the second display area, and the interface of the third application is displayed in the third display area, the interface of the first application, the interface of the second application, and the interface of the third application may be considered as interfaces of applications running in the foreground.

Example 5: A gesture 5 is used to trigger switching between the interface of the third application and an interface of a background application. For example, when a user performs the gesture 5, the interface of the background application rather than the interface of the third application may be displayed in the third display area. Alternatively, for example, when a user performs the gesture 4, the interface of the second application may be displayed in the third display area, the interface of the first application may be displayed in the second display area, and the interface of background application may be displayed in the first display area.

Example 6: A gesture 6 is used to trigger switching between the interface of the second application and an interface of a background application. For example, when a user performs the gesture 6, the interface of the background application rather than the interface of the second application may be displayed in the second display area.

In conclusion, switching between split-screen interfaces may include switching between split-screen interfaces in the foreground and switching between a split-screen interface in the foreground and the interface of the background application. The following describes a process of switching between split-screen interfaces based on the two scenarios.

### Scenario 1-1: Switching between the split-screen interfaces in the foreground

Switching between the split-screen interfaces in the foreground may include switching between two adjacent split-screen interfaces and switching between two non-adjacent split-screen interfaces.

For example, the electronic device is a tri-fold device. FIG. 7B(1)a and FIG. 7B(1)b show a process of switching between two adjacent split-screen interfaces. As shown in FIG. 7B(1)a, the interface of the phone application is displayed in the first display area, the interface of the settings application is displayed in the second display area, and the interface of the social application is displayed in the third display area. The two adjacent split-screen interfaces may include: the interface of the first application (the interface of the phone application) and the interface of the second application (the interface of the settings application), and the interface of the second application (the interface of the settings application) and the interface of the third application (the interface of the social application).

Switching between the interface of the first application and the interface of the second application is used as an example. The user may perform a first gesture on the interface of the first application to trigger switching between the interface of the first application and the interface of the second application. The first gesture indicates to switch between the interface of the first application and the interface of the second application. In some embodiments, the first gesture may be a gesture of touching the interface of the first application, or the first gesture may be a gesture of not touching the interface of the first application, for example, an air gesture.

For example, the first gesture is the gesture of touching the interface of the first application. The first gesture may be pressing, by the user, a preset position of the interface of the first application with a single finger and sliding toward the interface of the second application. Performing the first gesture on the interface of the first application may indicate one application interface, and sliding toward the interface of the second application may indicate another application interface. The preset position may be a bottom, a top, a left side, a right side, or the like of the interface of the first application.

In some embodiments, a sliding operation of sliding toward the interface of the second application may not exceed the first display area or may exceed the first display area. In the following example drawings, an example is used in which the sliding operation does not exceed the first display area.

As shown in FIG. 7B(1)a, because the interface of the second application is on the right side of the interface of the first application, the user pressing the bottom of the interface of the first application with a single finger and sliding rightward may trigger the electronic device to switch between the interface of the first application and the interface of the second application. As shown in FIG. 7B(1)b, the interface of the second application is displayed in the first display area, and the interface of the first application is displayed in the second display area.

In some embodiments, when the preset position is at the top of the interface of the first application, the preset position may be specifically a horizontal bar (bar) at the top of the interface of the first application.

In some embodiments, the first gesture may alternatively be, for example, dragging the interface of the first application to the second display area, or an operation at a preset position of the interface of the first application to trigger the electronic device to display an interface selection box. In this way, the user may select the interface of the second application from the interface selection box, to trigger the electronic device to switch between the interface of the first application and the interface of the second application. It should be understood that the interface selection box may include an identifier of an application running in the foreground, or may further include an identifier of an application running in the background.

Switching between application interfaces shown in FIG. 7B(1)a and FIG. 7B(1)b is applicable to the following scenario: The user may simultaneously view three application interfaces, and the user may place a currently processed application interface in the middle to help quick processing.

Refer to descriptions in FIG. 7B(1)a and FIG. 7B(1)b. The user may further perform the first gesture on the interface of the second application to trigger switching between the interface of the first application and the interface of the second application. For example, the user pressing a preset position of the interface of the second application with a single finger and sliding toward the interface of the first application may trigger the electronic device to switch between the interface of the first application and the interface of the second application. For details about the first gesture, refer to descriptions in the foregoing example.

It may be understood that, after the electronic device switches between the interface of the first application and the interface of the second application, the user pressing the bottom of the interface of the first application with a single finger and sliding leftward may trigger the electronic device to switch between the interface of the first application and the interface of the second application again. Then, the interface of the first application may be displayed in the first display area, and the interface of the second application may be displayed in the second display area.

Similarly, the user may trigger, in a same manner, the electronic device to switch between the interface of the second application and the interface of the third application that are adjacent to each other. Details are not described herein again.

With reference to FIG. 7B(2), the following describes, from a perspective of interaction between internal modules of the electronic device, a process in which the electronic device switches between the interface of the first application and the interface of the second application.

When detecting a user gesture on the interface of the first application, a split-screen container (for example, a container of the interface of the first application) detects whether the user gesture matches a switching gesture (for example, the first gesture). When the split-screen container determines that the user gesture matches the first gesture, the split-screen container invokes a window swap service. The window swap service accesses a session of the interface of the first application, and determines a position parameter (for example, coordinates 1) of the interface of the first application, and the window swap service accesses a session of the interface of the second application, and determines a position parameter (for example, coordinates 2) of the interface of the second application. After the position parameter of the interface of the first application and the position parameter of the interface of the second application are returned to the window swap service, the window swap service swaps the position parameter of the interface of the first application and the position parameter of the interface of the second application, to obtain updated window parameters. The updated window parameters may include, for example, the position parameter (for example, the coordinates 2) of the interface of the first application and the position parameter (for example, the coordinates 1) of the interface of the second application.

The window swap service may send the updated window parameters to a desktop layout refresh service. The desktop layout refresh service may rearrange the desktop based on the updated window parameters, to obtain an updated desktop layout parameter. The desktop layout refresh service may send the updated desktop layout parameter to a rendering service, and the rendering service may render the desktop based on the updated desktop layout parameter, so that the electronic device displays the interface of the first application in the second display area and displays the interface of the second application in the first display area. It may be understood that, to implement smooth switching between two application interfaces and improve user experience, an animation effect module may obtain, through rendering, an animation effect of switching between the two application interfaces. Correspondingly, the electronic device may display the animation effect.

It should be understood that, when the split-screen container determines that the user gesture does not match the first gesture, the split-screen container does not invoke the window swap service.

The following describes a process in which the electronic device switches between the two non-adjacent split-screen interfaces.

For example, the electronic device is a tri-fold device. FIG. 7C(1)a and FIG. 7C(1)b show a process of switching between the two non-adjacent split-screen interfaces. For FIG. 7C(1)a, refer to descriptions of FIG. 7B(1)a. With reference to FIG. 7C(1)a, the two non-adjacent split-screen interfaces may include the interface of the first application (the interface of the phone application) and the interface of the third application (the interface of the social application).

The user may perform a second gesture on the interface of the first application or the interface of the third application, to trigger the electronic device to switch between the interface of the first application and the interface of the third application. In some embodiments, the second gesture may be a gesture of touching the interface of the first application, or the second gesture may be a gesture of not touching the interface of the first application, for example, an air gesture.

For example, the second gesture is the gesture of touching the interface of the first application. The second gesture may be pressing, by the user, a preset position of the interface of the first application with a single finger and sliding away from the interface of the third application. "Sliding away from the interface of the third application" may be understood as sliding in a direction away from (or departing from) the interface of the third application. An objective of such setting in this embodiment of this application is as follows: Because the interface of the second application is located between the interface of the first application and the interface of the third application, the gesture of sliding toward the interface of the third application means the second gesture also sliding toward the interface of the second application, which will trigger the electronic device to switch between the interface of the first application and the interface of the second application. To achieve an objective of accurately triggering switching between the interface of the first application and the interface of the third application, the three application interfaces may be considered being arranged in a head-to-tail manner. In this case, the interface of the third application is on the left side of the interface of the first application, and the interface of the first application is on the right side of the interface of the third application.

As shown in FIG. 7C(1)a, the user pressing the bottom of the interface of the first application with a single finger and sliding leftward may trigger the electronic device to switch between the interface of the first application and the interface of the third application. Then, the interface of the third application may be displayed in the first display area, and the interface of the first application may be displayed in the third display area, as shown in FIG. 7C(1)b. Similarly, the user pressing the bottom of the interface of the third application with a single finger and sliding rightward may trigger the electronic device to switch between the interface of the first application and the interface of the third application. Then, the interface of the third application may be displayed in the first display area, and the interface of the first application may be displayed in the third display area.

In some embodiments, the second gesture may alternatively be, for example, dragging the interface of the first application to the third display area, or dragging the interface of the third application to the first display area. Alternatively, the second gesture may be, for example, an operation at a preset position of the interface of the first application to trigger the electronic device to display an interface selection box. In this way, the user may select the interface of the third application from the interface selection box, to trigger the electronic device to switch between the interface of the first application and the interface of the third application. For details about the interface selection box, refer to descriptions in the foregoing example.

The application interface shown in FIG. 7C(1)a and FIG. 7C(1)b is applicable to the following scenario: A user 1 is performing an operation on the interface of the first application, and a user 2 is on the right side of the user 1. The user 1 may perform the second gesture to enable the third display area to display the interface of the first application, so as to quickly share the interface of the first application to the user 2. Alternatively, a user 1 is performing an operation on the interface of the first application, a user 2 is performing an operation on the interface of the third application, and the user 2 is on the right side of the user 1. The user 1 may perform the second gesture to trigger the electronic device to switch between the interface of the first application and the interface of the third application, so that the user 1 and the user 2 may view the application interfaces currently being operated by the other.

In the tri-fold device, the two non-adjacent split-screen interfaces may be considered as two split-screen interfaces at two ends of the electronic device. Refer to the method in FIG. 7C(1)a and FIG. 7C(1)b. The user performing the second gesture may trigger the electronic device to switch between the two split-screen interfaces at the two ends of the electronic device. The two ends may be understood as an upper end and a lower end of the electronic device, or a left end and a right end of the electronic device. Similarly, the method in FIG. 7C(1)a and FIG. 7C(1)b is also applicable to two split-screen interfaces at two ends of the electronic device in a quad-fold device and a higher-order foldable device. However, in the quad-fold device and the higher-order foldable device, two non-adjacent split-screen interfaces may further include two split-screen interfaces not at the two ends of the electronic device.

The quad-fold device is used as an example. For example, when the quad-fold device is in an unfolded state, four display areas are included, and the four display areas are sequentially arranged from left to right, and are a first display area, a second display area, a third display area, and a fourth display area respectively. For a method for switching between the first display area and the fourth display area that are not adjacent to each other, refer to FIG. 7C(1)a and FIG. 7C(1)b. Non-adjacent display areas further include the first display area and the third display area, and the second display area and the fourth display area. For example, for this type of non-adjacent display area, a switching manner may be as follows: Switching between the first display area and the third display area is used as an example. The user may press the first display area with a single finger 1, and press the third display area with a single finger 2. The single finger 1 of the user may slide in a direction of the third display area, and the single finger 2 of the user may slide in a direction of the first display area. In this way, the electronic device may be triggered to switch between the first display area and the third display area.

With reference to FIG. 7C(2), the following describes, from a perspective of interaction between internal modules of the electronic device, a process in which the electronic device switches between the interface of the first application and the interface of the third application.

When detecting a user gesture on the interface of the first application, a split-screen container (for example, a container of the interface of the first application) detects whether the user gesture matches a switching gesture (for example, the second gesture). When the split-screen container determines that the user gesture matches the second gesture, the split-screen container invokes a window swap service. The window swap service accesses a session of the interface of the first application, and determines a position parameter (for example, coordinates 1) of the interface of the first application, and the window swap service accesses a session of the interface of the third application, and determines a position parameter (for example, coordinates 3) of the interface of the third application. After the position parameter of the interface of the first application and the position parameter of the interface of the third application are returned to the window swap service, the window swap service swaps the position parameter of the interface of the first application and the position parameter of the interface of the third application, to obtain updated window parameters. The updated window parameters may include, for example, the position parameter (for example, the coordinates 3) of the interface of the first application and the position parameter (for example, the coordinates 1) of the interface of the third application.

The window swap service may send the updated window parameters to a desktop layout refresh service. The desktop layout refresh service may rearrange the desktop based on the updated window parameters, to obtain an updated desktop layout parameter. The desktop layout refresh service may send the updated desktop layout parameter to a rendering service, and the rendering service may render the desktop based on the updated desktop layout parameter, so that the electronic device displays the interface of the first application in the third display area and displays the interface of the third application in the first display area. It may be understood that, to implement smooth switching between two application interfaces and improve user experience, an animation effect module may obtain, through rendering, an animation effect of switching between the two application interfaces. Correspondingly, the electronic device may display the animation effect.

It should be understood that, when the split-screen container determines that the user gesture does not match the second gesture, the split-screen container does not invoke the window swap service.

In this embodiment of this application, the user may perform the first gesture to trigger the electronic device to switch between two adjacent application interfaces, and the user may further perform the second gesture to trigger the electronic device to switch between two non-adjacent application interfaces.

### Scenario 1-2: Switching between the split-screen interface in the foreground and the interface of the background application

Switching between the split-screen interface in the foreground and the interface of the background application may include: switching between application interfaces (split-screen interfaces) at two ends of the electronic device and the interface of the background application, and switching between an application interface (a split-screen interface) not at two ends of the electronic device and the interface of the background application. The application interface not at the two ends of the electronic device may also be understood as an application interface in the middle of the electronic device.

For example, the electronic device is a tri-fold device. FIG. 7D(1)a and FIG. 7D(1)b show a process of switching between the application interfaces at the two ends of the electronic device and the interface of the background application. For FIG. 7D(1)a, refer to descriptions of FIG. 7B(1)a. With reference to FIG. 7D(1)a, the application interfaces at the two ends of the electronic device are the interface of the first application and the interface of the third application respectively. The interface of the first application is on the left side of the electronic device, and the interface of the second application is on the right side of the electronic device.

Switching between the interface of the first application and the interface of the background application is used as an example. The user may perform a third gesture on any one of the application interfaces at the two ends of the electronic device, to trigger switching between the interface of the first application and the interface of the background application. In some embodiments, any one of the application interfaces at the two ends of the electronic device may be referred to as an interface of a target application. For example, the interface of the target application may be the interface of the first application or the interface of the third application. The third gesture may be a gesture of touching the interface of the target application, or the third gesture may be a gesture of not touching the interface of the target application, for example, an air gesture.

For example, the third gesture is the gesture of touching the interface of the target application. The third gesture is pressing, by the user, a preset position of the interface of the first application with two fingers and sliding away from the interface of the third application; or pressing, by the user, a preset position of the interface of the third application with two fingers and sliding toward the interface of the first application.

As shown in FIG. 7D(1)a, the user pressing the bottom of the interface of the first application with two fingers and sliding leftward, or the user pressing the bottom of the interface of the third application with two fingers and sliding leftward may trigger the electronic device to switch between the interface of the first application and the interface of the background application. As shown in FIG. 7D(1)b, the interface of the second application may be displayed in the first display area, the interface of the third application may be displayed in the second display area, and the interface of the background application may be displayed in the third display area. In other words, the user performing the third gesture may trigger the application interface to move leftward, and display the interface of the background application in the rightmost display area, but the electronic device does not display the interface of the first application. It should be understood that an example in which the interface of the background application in FIG. 7D(1)b is a notepad application is used.

It should be understood that the electronic device may maintain a background task queue, and applications running in the background may be ranked in the background task queue in a specific order. An interface of a background application that is switched to the interface of the first application is an interface of a background application that is ranked first.

In some embodiments, the specific order may be ranking in descending order of the time of switching to the background, ranking in descending order of the user's use frequency (or use duration), or the like. Descending order of the time of switching to the background may be understood as follows: When the time of switching to the background is closer to a current moment, it indicates later time of switching to the background.

It should be understood that, with reference to FIG. 7D (1)b, if the user continues to press a preset position of the interface of the second application with two fingers, and performs a leftward sliding operation, the electronic device may be triggered to switch between the interface of the second application and an interface of a background application that is ranked second. The interface of the third application may be displayed in the first display area, the interface of the background application that is ranked first may be displayed in the second display area, and the interface of the background application that is ranked second may be displayed in the third display interface.

In some embodiments, the third gesture may alternatively be, for example, dragging the interface of the first application leftward to the outside of the first display area.

Alternatively, the third gesture may be, for example, a user operation at the preset position of the interface of the first application to trigger the electronic device to display an interface selection box. In this way, the user may select the interface of the background application from the interface selection box, to trigger the electronic device to switch between the interface of the first application and the interface of the background application. In this example, the interface selection box may display identifiers (such as names, icons, or numbers) of the applications running in the background. Thus, when there are a large quantity of background applications, if the user wishes to access an interface of a background application that is ranked third, the user needs to perform multiple sliding operations in the foregoing manner of pressing with two fingers and sliding, to view the interface of the background application that is ranked third. Compared with the foregoing manner of pressing with two fingers and sliding, the manner of selecting from the interface selection box allows the user to directly trigger the electronic device to display the interface of the background application that is ranked third, thereby making the operation more convenient.

The application interface shown in FIG. 7D(1)a and FIG. 7D(1)b is applicable to the following scenario: For example, the user switches a translation application to the background, the user watches a video in the third display area, and the user needs to translate the lines in the video. The user may perform the third gesture on the interface of the first application or the interface of the third application, to trigger the electronic device to display the video in the second display area, and display the translation application in the third display area. In this way, the user can use the translation application to translate the lines while watching the video.

Similarly, the user may trigger, in a same manner, the electronic device to switch between the interface of the third application and the interface of the background application. Details are not described herein again.

In conclusion, when the electronic device switches between the application interfaces at the two ends of the electronic device and the interface of the background application, the third gesture may be summarized as follows: The user presses a preset position of an interface of a first target application with two fingers, and slides away from an interface of a second target application; or the user presses a preset position of an interface of a second target application with two fingers, and slides toward the interface of the second application. The interface of the first target application is an interface of a to-be-switched foreground application, and the interface of the second target application is an interface of a target application at the other end of the electronic device except the interface of the first target application. For example, the interface of the first target application is the interface of the first application, and the interface of the second target application is the interface of the third application. It should be understood that "sliding away from the interface of the second target application" may be understood as sliding in a direction away from (or departing from) the interface of the second target application.

With reference to FIG. 7D(2), the following describes, from a perspective of interaction between internal modules of the electronic device, a process in which the electronic device switches between the interface of the first application and the interface of the background application.

When detecting a user gesture, a split-screen container (for example, a container of the interface of the first application) detects whether the user gesture matches a switching gesture (for example, the third gesture). When the split-screen container determines that the user gesture matches the third gesture, the split-screen container invokes a multi-task management service. The multi-task management service detects whether the background task queue is empty. When the background task queue is empty, it indicates that no background application exists. When the background task queue is not empty, it indicates that a background application exists.

When the background queue is not empty, the multi-task management service may obtain information about an application that is ranked first in the background task queue. The multi-task management service may send the information about the application that is ranked first to a session management service (for example, a window session management service), and the session management service may create a session of the application based on the information about the application that is ranked first. A window management service may create a window corresponding to the application that is ranked first, to carry an interface of the application.

The window management service (for example, a window control management service) may access a session of the interface of the first application, determine a position parameter (for example, coordinates 1) of the interface of the first application, access a session of the interface of the second application, determine a position parameter (for example, coordinates 2) of the interface of the second application, access a session of the interface of the third application, and determine a position parameter (for example, coordinates 3) of the interface of the third application. After the position parameter of the interface of the first application, the position parameter of the interface of the second application, and the position parameter of the interface of the third application are returned to the window management service, the window management service swaps the position parameters of the application interfaces to obtain updated window parameters. The updated window parameters may include, for example, the position parameter (for example, the coordinates 1) of the interface of the second application, the position parameter (for example, the coordinates 2) of the interface of the third application, and the position parameter (for example, the coordinates 3) of the interface of the background application. In some embodiments, the session management service may destroy a window that carries the interface of the first application.

The window management service may send the updated window parameters to a desktop layout refresh service. The desktop layout refresh service may rearrange the desktop based on the updated window parameters, to obtain an updated desktop layout parameter. The desktop layout refresh service may send the updated desktop layout parameter to a rendering service, and the rendering service may render the desktop based on the updated desktop layout parameter, so that the electronic device displays the interface of the second application in the first display area, displays the interface of the third application in the second display area, and displays the interface of the background application in the third display area. It may be understood that, to implement smooth switching between two application interfaces and improve user experience, an animation effect module may obtain, through rendering, an animation effect of switching between the two application interfaces. Correspondingly, the electronic device may display the animation effect.

It should be understood that when the split-screen container determines that the user gesture does not match the third gesture, the split-screen container does not invoke the multi-task management service.

In some embodiments, when the electronic device switches between the application interfaces at the two ends of the electronic device and the interface of the background application, the third gesture may alternatively be, for example, pressing, by the user, the preset position of the interface of the first target application with a single finger, and pressing the preset position of the interface of the second target application and sliding away from the interface of the second target application, or pressing, by the user, the preset position of the interface of the second target application with a single finger, and pressing the preset position of the interface of the first target application and sliding toward the interface of the second target application.

For example, switching between the interface of the first application and the interface of the background application is used as an example. For example, the interface of the first target application is the interface of the first application, and the interface of the second target application is the interface of the third application. With reference to FIG. 7E(1)a, the user pressing the bottom of the interface of the third application with a single finger, and sliding leftward at the bottom of the interface of the first application may trigger the electronic device to switch between the interface of the first application and the interface of the background application. With reference to FIG. 7E(1)b, the interface of the background application may be displayed in the first display area, the interface of the second application may be displayed in the second display area, and the interface of the third application may be displayed in the third display area.

With reference to FIG. 7E(2), the following describes, from a perspective of interaction between internal modules of the electronic device, a process in which the electronic device switches between the interface of the first application and the interface of the background application.

When detecting a user gesture, a split-screen container (for example, a container of the interface of the first application) detects whether the user gesture matches a switching gesture (for example, the third gesture). When the split-screen container determines that the user gesture matches the third gesture, the split-screen container invokes a multi-task management service. The multi-task management service detects whether the background task queue is empty. When the background task queue is empty, it indicates that no background application exists. When the background task queue is not empty, it indicates that a background application exists.

When the background queue is not empty, the multi-task management service may obtain information about an application that is ranked first in the background task queue. The multi-task management service may send the information about the application that is ranked first to a session management service (for example, a window session management service), and the session management service may create a session of the application based on the information about the application that is ranked first. A window management service may create a window corresponding to the application that is ranked first, to carry an interface of the application.

The window management service (for example, a window control management service) may access a session of the interface of the first application, and determine a position parameter (for example, coordinates 1) of the interface of the first application. After the position parameter of the interface of the first application is returned to the window management service, the window management service swaps position parameters of application interfaces to obtain updated window parameters. The updated window parameters may include, for example, a position parameter (for example, the coordinates 1) of the interface of the background application. In some embodiments, the session management service may destroy a window that carries the interface of the first application.

The window management service may send the updated window parameters to a desktop layout refresh service. The desktop layout refresh service may rearrange the desktop based on the updated window parameters, to obtain an updated desktop layout parameter. The desktop layout refresh service may send the updated desktop layout parameter to a rendering service, and the rendering service may render the desktop based on the updated desktop layout parameter, so that the electronic device displays the interface of the background application in the first display area, displays the interface of the second application in the second display area, and displays the interface of the third application in the third display area. It may be understood that, to implement smooth switching between two application interfaces and improve user experience, an animation effect module may obtain, through rendering, an animation effect of switching between the two application interfaces. Correspondingly, the electronic device may display the animation effect.

It may be understood that when the split-screen container determines that the user operation does not satisfy the third gesture, the split-screen container does not invoke the multi-task management service.

The foregoing describes a method for switching between the application interfaces at the two ends of the electronic device and the interface of the background application, and the following describes a method for switching between the application interface not at the two ends of the electronic device and the interface of the background application.

For example, the electronic device is a tri-fold device. FIG. 7F(a) and FIG. 7F(b) show a process of switching between the application interface in the middle of the electronic device and the interface of the background application. For FIG. 7F(a), refer to descriptions of FIG. 7B(1)a. With reference to FIG. 7F(a), , the application interface in the middle of the electronic device is the interface of the second application. Because the interface of the second application is located between the interface of the first application and the interface of the third application, the third gesture may be pressing, by the user, the preset position of the interface of the second application with a single finger and sliding upward or sliding downward.

As shown in FIG. 7F(a), , the user pressing the bottom of the interface of the second application with a single finger and sliding upward may trigger the electronic device to switch between the interface of the second application and the interface of the background application. As shown in FIG. 7F(b), the interface of the first application may be displayed in the first display area, the interface of the background application may be displayed in the second display area, and the interface of the third application may be displayed in the third display area.

In this example, when the electronic device switches between the application interface not at the two ends of the electronic device and the interface of the background application, the third gesture may be pressing the preset position of the application interface with a single finger, and sliding parallel to a folding edge or a folding axis (or a split-screen divider). In some embodiments, the third gesture may be described as: pressing the preset position of the application interface with a single finger and sliding toward a first direction, where the first direction is parallel to a folding edge or a folding axis (or a split-screen divider).

For example, as shown in FIG. 7F(a), , the folding edge is parallel to the left frame and the right frame of the electronic device. The user presses the preset position of the interface of the second application with a single finger and slides upward or downward. Such upward or downward sliding may be considered as a sliding operation parallel to the folding edge or the folding axis (or the split-screen divider). The foregoing parallel may allow for a tolerance, and thus an included angle between the sliding operation and the folding edge or the folding axis is not limited to 0°. For example, the included angle between the sliding operation and the folding edge or the folding axis may be 0° to 10°, for example, may be 0°, 1°, 2°, 3°, 4°, 5°, 6°, 7°, 8°, 9°, or 10°. The same applies to other descriptions of "parallel" throughout this document.

It may be understood that, when the electronic device switches between the application interface not at the two ends of the electronic device and the interface of the background application, for a process of interaction between the internal modules of the electronic device, refer to descriptions in FIG. 7E(2).

### Scenario 2: Switching between floating windows

For example, an electronic device is a tri-fold device. FIG. 8A(a) and FIG. 8A(b) show a process of switching between the floating windows. As shown in FIG. 8A(a), the electronic device displays application interfaces in the form of floating windows in a first display area, a second display area, and a third display area respectively. In other words, a first floating window is displayed in the first display area, a second floating window is displayed in the second display area, and a third floating window is displayed in the third display area. The first floating window corresponds to an interface of a first application, the second floating window corresponds to an interface of a second application, and the third floating window corresponds to an interface of a third application.

In some embodiments, positions and sizes of the first floating window, the second floating window, and the third floating window may be different, or may be all the same, or at least partially the same. FIG. 8A(a), is described by using an example in which positions of the first floating window, the second floating window, and the third floating window are different, and sizes of the first floating window, the second floating window, and the third floating window are different.

In some embodiments, a position of a floating window may be represented by coordinates of an upper left corner of the floating window in a coordinate system of a display screen of the electronic device. A setting of the coordinate system of the display screen of the electronic device is not limited in embodiments of this application. For example, as shown inFIG. 8A(a),, a position of the first floating window may be (X1, Y1), a size of the first floating window is a first size, a position of the second floating window may be (X2, Y2), a size of the second floating window is a second size, a position of the third floating window may be (X3, Y3), and a size of the third floating window is a third size.

For example, the electronic device switches between the first floating window and the second floating window. A user may perform a fourth gesture on the first floating window or the second floating window, to trigger the electronic device to switch between the first floating window and the second floating window. The fourth gesture may be a gesture of touching the first floating window or the second floating window, or the fourth gesture may be a gesture of not touching the first floating window or the second floating window, for example, an air gesture.

For example, the fourth gesture is the gesture of touching the first floating window or the second floating window. The fourth gesture may be pressing, by the user, a preset position of the first floating window with a single finger and sliding toward the second floating window, or pressing, by the user, a preset position of the second floating window with two fingers and sliding toward the first floating window. For the preset position, refer to descriptions in the foregoing scenario 1.

As shown in FIG. 8A(a),, the user pressing the top (for example, a top horizontal bar) of the first floating window with a single finger and sliding rightward or the user pressing the top (for example, a top horizontal bar) of the second floating window with a single finger and sliding leftward may trigger the electronic device to switch between the first floating window and the second floating window. As shown in FIG. 8A(b), the second floating window may be displayed in the first display area, the first floating window may be displayed in the second display area, and the third floating window may be displayed in the third display area.

In some embodiments, when switching between the first floating window and the second floating window, the electronic device may swap only the position parameters of the floating windows, and does not swap the size parameters of the floating windows. For example, as shown in FIG. 8A(b), when switching between the first floating window and the second floating window, the electronic device may display the second floating window at the position (X1, Y1) of the first display area and display the first floating window at the position (X2, Y2) of the second display area, where the size of the second floating window is the first size, and the size of the first floating window is the second size.

In some embodiments, when switching between the first floating window and the second floating window, the electronic device may swap the position parameters and the size parameters of the floating windows. For example, as shown in FIG. 8A(c), when switching between the first floating window and the second floating window, the electronic device may display the second floating window at the position (X1, Y1) of the first display area and display the first floating window at the position (X2, Y2) of the second display area, where the size of the second floating window is the second size and the size of the first floating window is the first size.

In some embodiments, the fourth gesture may alternatively be, for example, dragging the first floating window rightward to the second display area, or dragging the second floating window leftward to the first display area.

Alternatively, the fourth gesture may be, for example, a user operation at the preset position of the first floating window to trigger the electronic device to display an interface selection box. In this way, the user may select the second floating window from the interface selection box, to trigger the electronic device to switch between the first floating window and the second floating window. In this example, the interface selection box may display identifiers (for example, names, icons, or numbers) of applications running in the foreground. In this way, when there are a large quantity of display areas, the user may directly select a to-be-switched floating window without dragging over a long distance, thereby making the operation more convenient.

Similarly, the user may trigger, in a same manner, the electronic device to switch between the second floating window and the third floating window, and switch between the first floating window and the third floating window.

With reference to FIG. 8B, the following describes, from a perspective of interaction between internal modules of the electronic device, a process in which the electronic device switches between the first floating window and the second floating window.

When detecting a user gesture, a floating window container detects that the user gesture matches a switching gesture (for example, the fourth gesture). When the floating window container determines that the user gesture matches the fourth gesture, the floating window container invokes a window swap service. The window swap service accesses a session of the first floating window, and determines a position parameter (for example, coordinates 1) of the first floating window, and the window swap service accesses a session of the second floating window, and determines a position parameter (for example, coordinates 2) of the second floating window. After the position parameter of the first floating window and the position parameter of the second floating window are returned to the window swap service, the window swap service swaps the position parameter of the first floating window and the position parameter of the second floating window, to obtain updated window parameters. The updated window parameters may include, for example, the position parameter (for example, the coordinates 2) of the first floating window and the position parameter (for example, the coordinates 1) of the second floating window.

The window swap service may send the updated window parameters to a desktop layout refresh service. The desktop layout refresh service may rearrange the desktop based on the updated window parameters, to obtain an updated desktop layout parameter. The desktop layout refresh service may send the updated desktop layout parameter to a rendering service, and the rendering service may render the desktop based on the updated desktop layout parameter, so that the electronic device displays the first floating window in the second display area and displays the second floating window in the first display area. It may be understood that, to implement smooth switching between two floating windows and improve user experience, an animation effect module may obtain, through rendering, an animation effect of switching between the two floating windows. Correspondingly, the electronic device may display the animation effect.

It should be understood that, when the floating window container determines that a sliding direction and a sliding distance of a finger on the screen do not satisfy a second gesture, the floating window container does not invoke the window swap service.

In some embodiments, in a scenario in which the electronic device switches between the first floating window and the second floating window, and swaps the position parameters and the size parameters of the floating windows, the window swap service accesses the session of the first floating window, and determines the position parameter (for example, the coordinates 1) and the size parameter (the first size) of the first floating window, and the window swap service accesses the session of the second floating window, and determines the position parameter (for example, the coordinates 2) and the size parameter (the second size) of the second floating window. Correspondingly, the updated window parameters may include, for example, the position parameter (for example, the coordinates 2) and the size parameter (the first size) of the first floating window, and the position parameter (for example, the coordinates 1) and the size parameter (the second size) of the second floating window. In this way, based on the updated window parameters, the electronic device may display the second floating window of the second size at the coordinates 1 of the first display area, and the electronic device may display the first floating window of the first size at the coordinates 2 of the second display area.

### Scenario 3: Switching between a split-screen interface and a floating window

For a method for switching between the split-screen interface and the floating window, refer to descriptions in the foregoing scenario 1 and scenario 2. In some embodiments, for example, an electronic device is a tri-fold device. FIG. 9A and FIG. 9B show a process of switching between the split-screen interface and the floating window. As shown in FIG. 9A, a first floating window is displayed in a first display area, an interface of a second application is displayed in a second display area and the interface of the second application is a split-screen interface, and a third floating window is displayed in a third display area. The first floating window corresponds to an interface of a first application, and the third floating window corresponds to an interface of a third application. For example, as shown in FIG. 9A, a position of the first floating window is (X1, Y1), a size of the first floating window is a first size, a position of the third floating window is (X3, Y3), and a size of the third floating window is a third size.

Switching between the first floating window and the interface of the second application is used as an example. A user may perform a fifth gesture on the first floating window or the interface of the second application, to trigger switching between the first floating window and the interface of the second application. The third gesture may be a gesture of touching the first floating window or the interface of the second application, or the third gesture may be a gesture of not touching the first floating window or the interface of the second application, for example, an air gesture.

For example, the fifth gesture is a gesture of touching the first floating window or the second floating window. The fifth gesture may be pressing, by the user, a preset position of the first floating window with a single finger and sliding toward the interface of the second application; or pressing, by the user, a preset position of the interface of the second application with a single finger and sliding toward the first floating window. For the preset position, refer to descriptions in the foregoing scenario 1.

As shown in FIG. 9A, the user pressing the top (for example, a top horizontal bar) of the first floating window with a single finger and sliding rightward or the user pressing the bottom of the interface of the second application with a single finger and sliding leftward may trigger the electronic device to switch between the first floating window and the interface of the second application. As shown in FIG. 9B, the interface of the second application may be displayed in the first display area, the first floating window may be displayed in the second display area, and the third floating window may be displayed in the third display area.

In some embodiments, when switching between the first floating window and the interface of the second application, the electronic device may swap position parameters and size parameters of the floating windows. For example, as shown in FIG. 9B, when switching between the first floating window and the interface of the second application, the electronic device may display the interface of the second application in split-screen mode in the first display area, and display the first floating window at a position (X2, Y2), where the size of the first floating window is the first size. It should be understood that a relative position of the position (X2, Y2) in the second display area is the same as a relative position of the position (X1, Y1) in the first display area.

Alternatively, in some embodiments, when switching between the first floating window and the interface of the second application, the electronic device may display the second floating window in the first display area, and the electronic device may display the interface of the first application in split-screen mode in the second display area, where the second floating window corresponds to the interface of the second application, a position of the second floating window is (X1, Y1), a size of the second floating window is the first size, and the first floating window corresponds to the interface of the first application.

In some embodiments, the fifth gesture may alternatively be, for example, dragging the first floating window rightward to the second display area, or dragging the interface of the second application leftward to the first display area.

Alternatively, the fifth gesture may be, for example, a user operation at a preset position of the first floating window to trigger the electronic device to display an interface selection box. In this way, the user may select the interface of the second application from the interface selection box, to trigger the electronic device to switch between the first floating window and the interface of the second application.

Similarly, the user may trigger, in a same manner, the electronic device to switch between the interface of the second application and the third floating window.

It may be understood that, for a process of interaction between internal modules of the electronic device when the electronic device switches between the split-screen interface and the floating window, refer to descriptions of switching between the split-screen interfaces by the electronic device or descriptions of switching between the floating windows by the electronic device in the foregoing embodiment.

It may be understood that the electronic device may further switch between a picture-in-picture and a picture-in-picture, between a picture-in-picture and a floating window, and between a picture-in-picture and a split-screen interface. For a process of switching between the picture-in-picture and the picture-in-picture by the electronic device, refer to descriptions in the scenario 1-1. For a process of switching between the picture-in-picture and the floating window by the electronic device and between the picture-in-picture and the split-screen interface, refer to descriptions in the scenario 2 and the scenario 3.

### Scenario 4: Display area present when an application is started

For example, an electronic device is a tri-fold device. A desktop interface may be displayed in three display areas of the tri-fold device. As shown in FIG. 10A(a), an interface of a first desktop may be displayed in a first display area, an interface of a second desktop may be displayed in a second display area, and an interface of a third desktop may be displayed in a third display area. An icon of at least one application may be displayed in on each desktop interface, and a user may perform an operation on the icon of the application to trigger the electronic device to start the application.

For example, the user performs an operation on an icon of an application 1 on the interface of the second desktop. In some embodiments, for example, the user taps an application icon 1 on the interface of the second desktop, and an interface of the application 1 may be displayed in the second display area. In some embodiments, the application 1 may be considered as a first application.

In some embodiments, the user may perform a sixth gesture on an icon of the first application, to select a display area for displaying an application interface.

For example, the user may perform a short press on the icon of the application, and drag the icon of the application to a corresponding display area, to display an interface of the application in the display area. As shown in FIG. 10A(a), the user may perform a short press on the icon of the application 1 and drag the icon of the application 1 to the first display area, where the interface of the application 1 may be displayed in the first display area. It should be understood that, in FIG. 10A(b), an example in which a startup interface of the application 1 is displayed in the first display area is used for description. The operation of performing, by the user, a short press on the icon of the application 1 and dragging the icon of the application 1 to the preset position in the second display area may be considered as the sixth gesture.

In some embodiments, the user may perform a short press on the icon of the application 1 and drag the icon of the application 1 to the preset position in the second display area. In this time, the electronic device may display the interface of the application 1 in full screen. Displaying the interface of the application 1 in full screen indicates that the interface of the application 1 is displayed in the first display area, the second display area, and the third display area. The operation of performing, by the user, a short press on the icon of the application 1 and dragging the icon of the application 1 to the preset position in the second display area may be considered as the sixth gesture.

For example, the user may slide upward or downward the icon of the application by a distance, to trigger the electronic device to display an area option. The user may select a corresponding display area from the area option, so that the interface of the application is displayed in the display area. As shown in FIG. 10B(a), the user may slide upward the icon of the application 1 by a distance, and then an area option 11 may be displayed in the second display area. As shown in FIG. 10B(b), the area option 11 includes an identifier of each display area of the electronic device, for example, a first display area 111, a second display area 112, a third display area 113, and a full-screen display area 114. When the user selects the first display area 111, the interface of the application 1 may be displayed in the first display area, as shown in FIG. 10B(c). It should be understood that when the user selects the full-screen display area 114, the electronic device may display the interface of the application 1 in the first display area, the second display area, and the third display area. The operation of sliding upward or downward the icon of the application by the user by a distance may be considered the sixth gesture, and the distance may be considered as a preset distance.

In this embodiment of this application, when the application is started, the user may select to display the display area of the application interface. In this way, the user can perform selection based on a requirement of the user, thereby improving user experience.

With reference to FIG. 10C, the following describes a process in which the electronic device displays the interface of the application 1 in the first display area from a perspective of interaction between internal modules of the electronic device.

When detecting a user gesture, a split-screen container detects whether the user gesture matches a gesture (for example, the sixth gesture) that triggers application startup. When the split-screen container determines that the user operation satisfies the gesture for triggering application startup, the split-screen container invokes a session management service. The session management service (for example, a window session management service) may create a session of a window that carries the interface of the application 1, and a screen session management service caches information about the application 1.

In addition, a window management service (for example, a window control management service) may set a parameter, for example, a position parameter, of a window that carries the application 1. The window management service may send, to a desktop layout refresh service, the parameter of the window that carries the application 1, and the desktop layout refresh service may arrange the desktop based on the parameter of the window that carries the application 1, to obtain an updated desktop layout parameter. The updated desktop layout parameter indicates to display the interface of the application 1 in the first display area.

The desktop layout refresh service may send the updated desktop layout parameter to a rendering service, and the rendering service may render the desktop based on the updated desktop layout parameter, so that the electronic device displays the interface of the application 1 in the first display area. It may be understood that, to ensure smoothness of the startup interface of the application and improve user experience, an animation effect module may obtain, through rendering, an animation effect of starting the application 1. Correspondingly, the electronic device may display the animation effect.

It should be noted that user data (including but not limited to data used for analysis, stored data, displayed data, and the like) in this application is information and data that are authorized by the user or fully authorized by all parties. In addition, collection, use, and processing of related data need to comply with related laws, regulations, and standards of related countries and regions, and corresponding operation entries are provided for the user to choose to authorize or reject.

In an embodiment, an embodiment of this application further provides an electronic device. Refer to FIG. 11. The electronic device may include a processor 1101 (for example, a CPU) and a memory 1102. The memory 1102 may include a high-speed random-access memory (random-access memory, RAM), and may further include a non-volatile memory (non-volatile memory, NVM), for example, at least one magnetic disk memory. The memory 1102 may store various instructions, to complete various processing functions and implement the steps of the methods in this application.

Optionally, the electronic device in this application may further include a power supply 1103, a communication bus 1104, and a communication port 1105. The communication port 1105 is configured to implement a connection and communication between the electronic device and another peripheral device. In this embodiment of this application, the memory 1102 is configured to store computer-executable program code. The program code includes instructions. When the processor 1101 executes the instructions, the instructions enable the processor 1101 of the electronic device to perform the actions in the foregoing method embodiments. Implementation principles and technical effect thereof are similar to those in the foregoing method embodiments. Details are not described herein again.

Optionally, the electronic device in this application may further include a display screen 1106. The display screen 1106 may display an interface of the electronic device. For example, the electronic device is a tri-fold device. The display screen 1106 may include a first display area, a second display area, and a third display area.

It should be noted that the modules or components in the foregoing embodiments may be configured as one or more integrated circuits for implementing the foregoing methods, for example, one or more application-specific integrated circuits (application-specific integrated circuit, ASIC), one or more digital signal processors (digital signal processor, DSP), or one or more field programmable gate arrays (field programmable gate array, FPGA). For another example, when one of the foregoing modules is implemented in a form of scheduling program code by a processing element, the processing element may be a general-purpose processor, for example, a central processing unit (central processing unit, CPU) or another processor that can call the program code, for example, a controller. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that, in descriptions of this application, terms such as "first" and "second" are merely used for distinguishing and description, but should not be understood as indicating or implying relative importance, or should not be understood as indicating or implying a sequence.

It may be understood that various numerical designations in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A display method, applied to an electronic device, wherein the electronic device comprises a first display area, a second display area, and a third display area, the second display area is located between the first display area and the third display area, and the method comprises:
displaying an interface of a first application in the first display area, displaying an interface of a second application in the second display area, and displaying an interface of a third application in the third display area; and
in response to a first gesture performed by a user on the interface of the first application or the interface of the second application, displaying the interface of the second application in the first display area, and displaying the interface of the first application in the second display area.

2. The method according to claim 1, wherein the first gesture is pressing a preset position of the interface of the first application with a single finger and sliding toward the interface of the second application, or pressing a preset position of the interface of the second application with a single finger and sliding toward the interface of the first application; or
the first gesture is dragging the interface of the first application to the second display area, or dragging the interface of the second application to the first display area.

3. The method according to claim 1 or 2, wherein the interface of the first application, the interface of the second application, and the interface of the third application belong to different applications.

4. The method according to any one of claims 1 to 3, wherein after displaying the interface of the first application in the first display area, displaying the interface of the second application in the second display area, and displaying the interface of the third application in the third display area, the method further comprises:
in response to a second gesture performed by the user on the interface of the first application or the interface of the third application, displaying the interface of the third application in the first display area, and displaying the interface of the first application in the third display area, wherein the second gesture is different from the first gesture.

5. The method according to claim 4, wherein the second gesture is pressing the preset position of the interface of the first application with a single finger and sliding away from the interface of the third application, or pressing a preset position of the interface of the third application with a single finger and sliding away from the interface of the first application; or
the second gesture is dragging the interface of the first application to the third display area, or dragging the interface of the third application to the first display area.

6. The method according to any one of claims 1 to 5, wherein after displaying the interface of the first application in the first display area, displaying the interface of the second application in the second display area, and displaying the interface of the third application in the third display area, the method further comprises:
in response to a third gesture performed by the user on the interface of the first application or the interface of the third application, displaying the interface of the second application in the first display area, displaying the interface of the third application in the second display area, and displaying an interface of a background application in the third display area.

7. The method according to claim 6, wherein an application to which the interface of a background application belongs is an application ranked first in a background task queue; and after displaying the interface of the second application in the first display area, displaying the interface of the third application in the second display area, and displaying the interface of the background application in the third display area, the method further comprises:
in response to the third gesture performed by the user on the interface of the second application or the interface of the background application, displaying the interface of the third application in the first display area, displaying the interface of the background application in the second display area, and displaying, in the third display area, an interface of a background application that is ranked second in the background task queue.

8. The method according to claim 6, wherein the third gesture is pressing the preset position of the interface of the first application with two fingers and sliding away from the interface of the third application, or pressing the preset position of the interface of the third application with two fingers and sliding toward the interface of the first application.

9. The method according to any one of claims 1 to 5, wherein after displaying the interface of the first application in the first display area, displaying the interface of the second application in the second display area, and displaying the interface of the third application in the third display area, the method further comprises:
in response to a third gesture performed by the user on the interface of the first application or the interface of the third application, displaying an interface of a background application in the first display area, displaying the interface of the second application in the second display area, and displaying the interface of the third application in the third display area.

10. The method according to claim 9, wherein the third gesture is touching and holding the preset position of the interface of the third application with a single finger, and pressing the preset position of the interface of first application and sliding away from the interface of the third application.

11. The method according to any one of claims 1 to 5, wherein after displaying the interface of the first application in the first display area, displaying the interface of the second application in the second display area, and displaying the interface of the third application in the third display area, the method further comprises:
in response to a third gesture performed by the user on the interface of the second application, displaying the interface of the first application in the first display area, displaying an interface of a background application in the second display area, and displaying the interface of the third application in the third display area.

12. The method according to claim 11, wherein the third gesture is pressing the preset position of the interface of the second application with a single finger and sliding in a first direction, wherein the first direction is parallel to a split-screen divider, and the split-screen divider is a split-screen divider between the second display area and the first display area.

13. The method according to any one of claims 1 to 12, wherein the interface of the first application, the interface of the second application, and the interface of the third application are displayed in the following form: a split screen or a floating window.

14. The method according to claim 13, wherein when the interface of the first application and the interface of the second application are displayed as floating windows, the interface of the first application corresponds to a first floating window, and the interface of the second application corresponds to a second floating window, wherein the first floating window is at a first position of a display screen of the electronic device, the second floating window is at a second position of the display screen, a size of the first floating window is a first size, and a size of the second floating window is a second size; and
in response to the first gesture performed by the user on the interface of the first application or the interface of the second application, displaying the interface of the second application in the first display area, and displaying the interface of the first application in the second display area comprises:
in response to a fourth gesture performed by the user on the first floating window or the second floating window, displaying the second floating window of the second size at the first position, and displaying the first floating window of the first size at the second position; or
in response to a fourth gesture performed by the user on the first floating window or the second floating window, displaying the second floating window of the first size at the first position, and displaying the first floating window of the second size at the second position.

15. The method according to claim 13, wherein when the interface of the first application is displayed as a floating window and the interface of the second application is displayed in split-screen mode, the interface of the first application corresponds to a first floating window, wherein the first floating window is at a first position of a display screen of the electronic device, and a size of the first floating window is a first size; and
in response to the first gesture performed by the user on the interface of the first application or the interface of the second application, displaying the interface of the second application in the first display area, and displaying the interface of the first application in the second display area comprises:
in response to a fifth gesture performed by the user on the first floating window or the interface of the second application, displaying the interface of the second application in split-screen mode in the first display area, and displaying the first floating window of the first size in the second display area, wherein a relative position of the first floating window in the second display area is the same as a relative position of the first position in the first display area; or
in response to a fifth gesture performed by the user on the first floating window or the interface of the second application, displaying a second floating window of the first size at the first position, and displaying the interface of the first application in split-screen mode in the second display area, wherein the second floating window corresponds to the interface of the second application.

16. The method according to any one of claims 1 to 15, wherein the method further comprises:
displaying an interface of a first desktop in the first display area, displaying an interface of a second desktop in the second display area, and displaying an interface of a third desktop in the third display area, wherein the interface of the first desktop comprises an icon of the first application; and
displaying the interface of the first application in the second display area in response to a sixth gesture performed by the user on the icon of the first application, wherein the sixth gesture indicates to display the interface of the first application in the second display area.

17. The method according to claim 16, wherein the sixth gesture is performing a short press on the icon of the first application, and dragging the icon of the first application to the second display area; or
the sixth gesture is sliding the icon of the first application in the first direction, and selecting the second display area from an area option, wherein sliding in the first direction is used to trigger the electronic device to display the area option, the first direction is parallel to the split-screen divider, and the split-screen divider is a split-screen divider between the second display area and the first display area.

18. An electronic device, comprising a processor and a memory, wherein
the memory stores computer-executable instructions; and
the processor executes the computer-executable instructions stored in the memory, to enable the processor to perform the method according to any one of claims 1 to 17.

19. A computer-readable storage medium, wherein the computer-readable storage medium stores a computer program or instructions, and when the computer program or the instructions are run, the method according to any one of claims 1 to 17 is implemented.
